# EUROPÄISCHE PATENTSCHRIFT

(11) **EP 4 004 084 B1**
(45) Veröffentlichungstag und Bekanntmachung des Hinweises auf die Patenterteilung: **06.09.2023**
(21) Anmeldenummer: 20750646.0
(22) Anmeldetag: 31.07.2020
(51) Int. Cl.: C08G 69/14, C08G 63/183, C08G 63/60, C08G 63/66, C08G 63/664, C08G 65/20, C08G 81/00, C08J 9/00, C08G 69/40, C08L 67/03, C08L 77/06

(54) **NEUE BLOCKCOPOLYMERE**
NOVEL BLOCK COPOLYMERS
NOUVEAUX COPOLYMÈRES SÉQUENCÉS

(30) Priorität: 31.07.2019 EP 19189340
(43) Veröffentlichungstag der Anmeldung: 01.06.2022
(73) Patentinhaber: BASF SE, 67056 Ludwigshafen am Rhein (DE)
(72) Erfinder: POESELT, Elmar, 49448 Lemfoerde (DE); THIELBEER, Frank, 49448 Lemfoerde (DE); SCHMIDT, Lisa Marie, 49448 Lemfoerde (DE); HUELSMANN, Theresa, 49448 Lemfoerde (DE); GUTMANN, Peter, 67056 Ludwigshafen am Rhein (DE)
(74) Vertreter: BASF IP Association
(86) Internationale Anmeldenummer: PCT/EP2020/071676
(87) Internationale Veröffentlichungsnummer: WO 2021/019076

(56) Entgegenhaltungen:
- WO-A1-2018/146426
- US-A1- 2001 009 662
- US-A1- 2015 273 102

## Beschreibung

Die vorliegende Erfindung betrifft ein Blockcopolymer mindestens enthaltend einen Block (P1), der erhalten oder erhältlich ist durch Umsetzung eines Triblockcopolymers mit der Struktur A-B-A', wobei Block B ausgewählt ist aus Polyethern oder Polyestern und die Blöcke A und A' gleich oder verschieden sind, und mindestens eines Polymers (PM) ausgewählt aus der Gruppe bestehend aus Polyestern und Polyethern, und einen Block (P2) der ausgewählt ist aus der Gruppe bestehend aus Polyamiden und Polyestern. Weiterhin betrifft die vorliegende Erfindung ein Verfahren zur Herstellung eines erfindungsgemäßen Blockcopolymers, einen Formkörper, umfassend ein erfindungsgemäßes Blockcopolymer sowie die Verwendung eines erfindungsgemäßen Blockcopolymers zur Herstellung eines Formkörpers.

Unter einem Blockcopolymer wird im Rahmen der Erfindung ein Polymer verstanden, das sich aus sich wiederholenden Blöcken zusammensetzt, beispielsweise aus zwei sich wiederholenden Blöcken.

Polymere auf Basis von Polyamiden oder Polyestern werden in verschiedenen Bereichen eingesetzt. Je nach Anwendung können die Eigenschaften des Polymers modifiziert werden. Thermoplastische Elastomere werden beispielsweise auch in der Literatur beschrieben, beispielsweise in Jiri George Drobny, Handbook of Thermoplastic Elastomers, PDL Handbook Series, Elsevier, 2007, Geoffrey Holden, Hans R. Kricheldorf, Roderic P. Quirk, Thermoplastic Elastomers, Hanser Verlag, 2004, oder Chunwang Yi, Zhihan Peng, Huaping Wang, Min Li, Chaosheng Wang, Synthesis and characteristics of thermoplastic elastomer based on polyamide-6, 2011, 60, 12, 1728-1736.

Auch Blockcopolymere enthaltend Polyamidblöcke oder Polyesterblöcke sind an sich aus dem Stand der Technik bekannt und werden in verschiedenen Bereichen eingesetzt. Thermoplastische Polyamide werden beispielsweise beschrieben in DE2936976, DE2936977, DE3818209A1, US2011213076 oder auch US8481652.

Thermoplastische Polyester werden beschrieben in US4355155A, US3766146A, US3891604A, US6274696B1, US7973124B2, EP0659825A2, US9150724B2, WO2001004174A1, US3663653A, EP2325249A1, und US5955565A.

Blockcopolymere auf Basis von Polyamiden oder Polyestern weisen üblicherweise gute mechanische Eigenschaften auf und eine gute Beständigkeit gegen thermische oder UV-Alterung. Weiterhin weisen sie über weite Temperaturbereiche eine gute Beständigkeit bei dynamischer Beanspruchung auf.

Ether basierte thermoplastische Polyester und thermoplastische Polyamide stechen hierbei durch ihre Hydrolysebeständigkeit und vor allem bei Verwendung von Polytetrahydrofuranbasierten Etherblöcken niedrigen Tg der Weichphase hervor

Gerade bei auf Polytetrahydrofuranen (auch als Polytetramethylenoxide bezeichnet) basierenden Elastomeren zeigt sich ein Aufschmelzen der Weichphase, das beispielsweise durch DSC-Messungen (Heizrate 20K/min) nach Vortrocknung detektiert werden kann. In einem Bereich von -20 bis 20°C zeigen entsprechende Materialien ein Maximum. Dieses Temperaturverhalten beeinflusst die elastischen Eigenschaften in dem entsprechenden Temperaturbereich nachteilig.

Somit war es eine Aufgabe der vorliegenden Erfindung, Blockcopolymere auf Basis von Polyestern und Polyamiden bereitzustellen, die gute mechanisch Eigenschaften und eine gute Verarbeitbarkeit aufweisen sowie gute dynamische Eigenschaften in weiten Temperaturbereichen, insbesondere bei tiefen Temperaturen.

Erfindungsgemäß wird diese Aufgabe gelöst durch ein Blockcopolymer mindestens enthaltend
(i) einen Block (P1), der erhalten oder erhältlich ist durch Umsetzung
   (a) eines Triblockcopolymers mit der Struktur A-B-A', wobei Block B ausgewählt ist aus Polyethern oder Polyestern und die Blöcke A und A' gleich oder verschieden sind, und
   (b) mindestens eines Polymers (PM) ausgewählt aus der Gruppe bestehend aus Polyestern und Polyethern,
(ii) und einen Block (P2) der ausgewählt ist aus der Gruppe bestehend aus Polyamiden und Polyestern.

Überraschend wurde gefunden, dass durch die erfindungsgemäße Kombination der Blöcke (P1) und (P2) eine höhere Temperaturunempfindlichkeit des Polymers erreicht werden kann. Dies hat für alle Anwendungen Vorteile und erzielt auch eine höhere Elastizität und somit auch höhere Rückprallelastizität über weite Temperaturbereiche, weswegen es nicht nur für kompakte, sondern auch für geschäumte Materialien Vorteile hat.

Es wurde überraschend gefunden, dass sich derartige Blockcopolymere gut zu Formkörpern und auch zu einem geschäumten Granulat verarbeiten lassen, das sich wiederum gut zu Formkörpern weiterverarbeiten lässt, die insbesondere einen sehr guten Rebound aufweisen.

Erfindungsgemäß weist das Blockcopolymer einen Block (P1) und einen Block (P2) auf. Dabei ist Block (P2) ausgewählt aus der Gruppe bestehend aus Polyamiden und Polyestern. Der Block (P1) ist erhalten oder erhältlich ist durch Umsetzung eines Triblockcopolymers mit der Struktur ABA', wobei Block B ausgewählt ist aus Polyethern oder Polyestern und die Blöcke A und A' gleich oder verschieden sind und mindestens eines Polymers (PM) ausgewählt aus der Gruppe bestehend aus Polyestern und Polyethern.

Das erfindungsgemäße Blockcopolymere kann weitere Blöcke aufweisen, beispielsweise weitere Polyesterblöcke, Polyamidblöcke oder auch weitere Etherblöcke. Die Polymere mit Polyamidblöcken und Polyetherblöcken können auch statistisch verteilte Einheiten enthalten. Die Polyamidblöcke können Homopolyamide oder Copolyamide enthalten.

Erfindungsgemäß kann dabei zur Herstellung des Blocks (P1) eine Zusammensetzung enthaltend das Triblockcopolymer ABA' und das Polymer (PM) ausgewählt aus der Gruppe bestehend aus Polyestern und Polyethern eingesetzt werden, die auch weitere Verbindungen, insbesondere weitere Polyether oder Polyester.

Das Triblockcopolymer ABA' weist erfindungsgemäß einen Block B ausgewählt aus der Gruppe bestehend aus Polyethern oder Polyestern auf sowie einen Block A und einen Block A'. Erfindungsgemäß können die Blöcke A und A' gleich oder verschieden sein und können sich sowohl in ihrer chemischen Natur als auch der Blocklänge unterscheiden. Erfindungsgemäß können die Blöcke A und A' beispielsweise ausgewählt sein aus Estern, Polycaprolactonen oder Ethern.

Erfindungsgemäß unterscheidet sich vorzugsweise die Struktur der Blöcke B und A bzw. B und A'. Gemäß einer Ausführungsform ist beispielsweise B ausgewählt aus der Gruppe bestehend aus Polyethern und A und A' sind ausgewählt aus der Gruppe bestehend aus Polycaprolactonen und Polyestern. Gemäß einer weiteren Ausführungsform ist B ausgewählt aus der Gruppe bestehend aus Polyestern und A und A' sind ausgewählt aus der Gruppe bestehend aus Polyethern.

Bevorzugt handelt es sich bei den erfindungsgemäßen Blockcopolymeren um Elastomere, weiter bevorzugt um thermoplastische Elastomere. Dabei kann erfindungsgemäß das Verhältnis der Blöcke in weiten Bereichen variieren. Vorteilhafterweise umfasst das erfindungsgemäße Blockcopolymer 1 bis 99% des Blocks (P1) und 1 bis 99% des Blocks (P2), weiter bevorzugt 5 bis 95% des Blocks (P1) und 5 bis 95% des Blocks (P2), insbesondere 15 bis 85% des Blocks (P1) und 15 bis 85% des Blocks (P2), besonders bevorzugt 30 bis 70% des Blocks (P1) und 30 bis 70% des Blocks (P2).

Das Triblockcopolymer umfasst die Blöcke B und A und A'. Der Block B ist erfindungsgemäß ausgewählt aus der Gruppe bestehend aus Polyethern und Polyestern. Geeignete Polyether und Polyester sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Das zahlenmittlere Molekulargewicht der erfindungsgemäß eingesetzten Polyetherpolyole und Polyesterpolyole liegen vorzugsweise im Bereich von 500 und 5000 g/mol, beispielsweise im Bereich von 550 g/mol und 2000 g/mol, bevorzugt im Bereich von 600 g/mol und 1500 g/mol, insbesondere zwischen 650 g/mol und 1000 g/mol.

Bevorzugte Polyetherole sind erfindungsgemäß Polyethyleneglykole, Polypropylenglykole und Polytetramethylenoxide, insbesondere hydroxy-terminierte Polytetramethylenoxide, sowie deren Mischpolyetherole. Beispielsweise können erfindungsgemäß auch Mischungen verschiedener Polytetramethylenoxide eingesetzt werden, die sich im Molekulargewicht unterscheiden.

Sofern Polytetramethylenoxide als Block B eingesetzt wird, liegt das zahlenmittlere Molekulargewicht Mn des Polytetramethylenoxids bevorzugt im Bereich von 500 bis 5000 g/mol. Weiter bevorzugt liegt das zahlenmittlere Molekulargewicht Mn des Polytetramethylenoxids im Bereich von 500 bis 1400 g/mol.

Erfindungsgemäß können Polytetramethylenoxide eingesetzt werden, die aus fossilen oder auch biologischen Quellen stammen.

Als Polyester haben sich beispielsweise die Polyalkylenterephthalate von Alkandiolen mit 2 bis 6 Kohlenstoffatomen bewährt, insbesondere aromatische Polyester ausgewählt aus der Gruppe bestehend aus Polybutylenterephthalat (PBT), Polyethylenterephthalat (PET) und Polyethylennaphtalat (PEN), so dass bevorzugt Polyethylenterephthalat und insbesondere bevorzugt Polybutylenterephthalat oder Mischungen aus Polyethylenterephthalat und Polybutylenterephthalat Anwendung finden.

Bevorzugt haben die als Block B eingesetzten Polyole eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Vorzugsweise wird als Block B ein Polyether eingesetzt, wobei insbesondere Polytetramethylenoxide vorteilhaft sind. Geeignete Polytetramethylenoxide oder Derivate davon sind dem Fachmann an sich bekannt. Bevorzugte Polyetherole sind erfindungsgemäß Polyethyleneglykole, Polypropylenglykole und Polytetramethylenoxide, sowie deren M ischpolyetherole.

Gemäß einer weiteren Ausführungsform betrifft die vorliegende Erfindung demgemäß ein Blockcopolymer wie zuvor beschrieben, wobei der Block B ausgewählt ist aus Polytetramethylenoxiden und Polytrimethylenoxiden.

Gemäß einer Ausführungsform der vorliegenden Erfindung ist B ausgewählt aus der Gruppe bestehend aus Polyethern. Demgemäß ist das Triblockcopolymer gemäß dieser Ausführungsform ein Polyether mit Endblöcken A und A'. Vorzugsweise sind A und A' gemäß dieser Ausführungsform ausgewählt aus der Gruppe bestehend aus Polycaprolactonen und Polyestern, beispielsweise aus Polyesterblöcken aus einer Dicarbonsäure wie beispielsweise Adipinsäure oder Sebacinsäure und einem Diol.

Geeignete Triblockcopolyester können beispielsweise durch Umsetzung der freien Hydroxygruppen des Blocks B, insbesondere des Polytetramethylenoxids erhalten werden. Geeignete Triblockcopolymere sind beispielsweise Poly-ε-caprolactonpolyole, d.h. Polyole, die durch Umsetzung von ε-Caprolacton und einem Polyether, beispielsweise einem Polytetramethylenoxid als Startermolekül erhalten werden.

Geeignete Poly-ε-caprolactonpolyole sind beispielsweise solche mit einem zahlenmittleren Molekulargewicht im Bereich von 500 bis 5000 g/mol, bevorzugt im Bereich von 1000 bis 5000 g/mol, weiter bevorzugt im Bereich von 1500 bis 2500 g/mol. Vorzugsweise werden Poly-ε-caprolactondiole eingesetzt, d.h. solche Poly-ε-caprolactonpolyol, die unter Verwendung eines difunktionellen Starters erhalten werden oder erhältlich sind. Geeignete Starter sind beispielsweise Diole mit einem zahlenmittleren Molekulargewicht im Bereich von 50 bis 1500 g/mol, bevorzugt von 80 bis 1500 g/mol, beispielsweise Polyetherpolyole oder Polyesterpolyole. Insbesondere sind Polyetherpolyole geeignet.

Im Rahmen der vorliegenden Erfindung werden die zahlenmittleren Molekulargewichte soweit nicht anders angegeben erhalten durch die Bestimmung der OH-Zahl. Geeignete Messbedingungen sind dem Fachmann bekannt.

Geeignete Startermoleküle sind weiterhin ausgewählt aus der Gruppe bestehend aus Neopentylglykol (NPG), 1,4-Butandiol (BDO), 1,6-Hexandiol (HDO) und langkettigen Polyetherdiolen mit einem zahlenmittleren Molekulargewicht im Bereich von 500 bis 1500 g/mol, bevorzugt im Bereich von 800 bis 1200 g/mol, weiter bevorzugt 900 bis 1100 g/mol. Erfindungsgemäß kann Block B weiterhin ausgewählt sein aus der Gruppe bestehend aus α-Hydro-ω-hydroxypoly(oxytetramethylen)-diolen, Polyethylenglykolen und Polypropylenglykolen, bevorzugt aus der Gruppe bestehend aus α-Hydro-ω-hydroxypoly(oxytetramethylen)-diolen mit einem zahlenmittleren Molekulargewicht im Bereich von 150 bis 1500 g/mol, Polyethylenglykolen mit einem zahlenmittleren Molekulargewicht im Bereich von 150 bis 1500 g/mol und Polypropylenglykolen mit einem zahlenmittleren Molekulargewicht im Bereich von 150 bis 1500 g/mol.

Im Rahmen der vorliegenden Erfindung werden die zahlenmittleren Molekulargewichte soweit nicht anders angegeben erhalten durch die Bestimmung der OH-Zahl. Geeignete Messbedingungen sind dem Fachmann bekannt.

Erfindungsgemäß kann der Block B beispielsweise ein Molekulargewicht Mn im Bereich von 100 bis 1500 g/mol aufweisen, bevorzugt im Bereich von 200 bis 1400 g/mol, weiter bevorzugt im Bereich von 500 bis 1300 g/mol, und die Blöcke A und A' können unabhängig voneinander beispielsweise ein Molekulargewicht Mn im Bereich von 200 bis 1500 g/mol aufweisen, bevorzugt im Bereich von 300 bis 1000 g/mol, weiter bevorzugt im Bereich von 400 bis 600 g/mol.

Gemäß einer weiteren Ausführungsform betrifft die vorliegende Erfindung demgemäß ein Blockcopolymer wie zuvor beschrieben, wobei der Block A oder der Block A' oder der Block A und der Block A' ausgewählt sind aus Polycaprolactonen.

Gemäß einer weiteren Ausführungsform betrifft die vorliegende Erfindung auch ein Blockcopolymer wie zuvor beschrieben, wobei der Block B ausgewählt ist aus Polyethern und der Block A oder der Block A' oder der Block A und der Block A' ausgewählt sind aus Polycaprolactonen.

Gemäß einer weiteren Ausführungsform betrifft die vorliegende Erfindung demgemäß ein Blockcopolymer wie zuvor beschrieben, wobei das Triblockcopolymer ein Poly-ε-caprolactonpolyol ist, das erhältlich ist oder erhalten wird durch Umsetzung von ε-Caprolacton und einem Startermolekül, das ausgewählt ist aus der Gruppe bestehend aus α-Hydro-ω-hydroxypoly(oxytetramethylen)-diolen.

Gemäß einer weiteren Ausführungsform betrifft die vorliegende Erfindung ein Blockcopolymer wie zuvor beschrieben, wobei das zahlenmittlere Molekulargewicht Mn des Triblockcopolymers im Bereich von 500 bis 3500 g/mol liegt, weiter bevorzugt im Bereich von 500 bis 3000 g/mol.

Erfindungsgemäß ist der Block (P1) erhalten oder erhältlich durch Umsetzung eines Triblockcopolymers mit der Struktur ABA` und mindestens eines Polymers (PM) ausgewählt aus der Gruppe bestehend aus Polyestern und Polyethern. Geeignet als Polymer (PM) sind beispielsweise Polyether oder Polyester, die mit dem Triblockcopolymer gut mischbar sind. Im Rahmen der vorliegenden Erfindung sind beispielsweise solche Polyether oder Polyester als Polymer (PM) geeignet, die mit dem Triblockcopolymer eine Zusammensetzung bilden, die zur Herstellung der erfindungsgemäßen Blockcopolymere eingesetzt werden kann. Vorzugsweise zeigt die Zusammensetzung beim Vormischen und unter den Reaktionsbedingungen keine sichtbare Phasentrennung.

Geeignete Polyether und Polyester sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Das zahlenmittlere Molekulargewicht der erfindungsgemäß eingesetzten Polyetherpolyole und Polyesterpolyole liegen vorzugsweise im Bereich von 500 und 5000 g/mol, beispielsweise im Bereich von 1000 g/mol und 3500 g/mol, bevorzugt im Bereich von 600 g/mol und 1500 g/mol, insbesondere zwischen 1500 g/mol und 2500 g/mol.

Bevorzugte Polyetherole sind erfindungsgemäß Polyethyleneglykole, Polypropylenglykole und Polytetramethylenoxide, sowie deren Mischpolyetherole. Beispielsweise können erfindungsgemäß auch Mischungen verschiedener Polytetramethylenoxide eingesetzt werden, die sich im Molekulargewicht unterscheiden.

Sofern Polytetramethylenoxide als Polymer (PM) eingesetzt wird, liegt das zahlenmittlere Molekulargewicht Mn des Polytetramethylenoxids bevorzugt im Bereich von 500 bis 5000 g/mol. Weiter bevorzugt liegt das zahlenmittlere Molekulargewicht Mn des Polytetramethylenoxids im Bereich von 1500 bis 3500 g/mol, besonders bevorzugt im Bereich von 1500 bis 3000 g/mol.

Auch die als Polymer (PM) eingesetzten Polytetramethylenoxide können aus fossilen oder auch biologischen Quellen stammen.

Als Polyester haben sich beispielsweise die Polyalkylenterephthalate von Alkandiolen mit 2 bis 6 Kohlenstoffatomen bewährt, insbesondere aromatische Polyester ausgewählt aus der Gruppe bestehend aus Polybutylenterephthalat (PBT), Polyethylenterephthalat (PET) und Polyethylennaphtalat (PEN), so dass bevorzugt Polyethylenterephthalat und insbesondere bevorzugt Polybutylenterephthalat oder Mischungen aus Polyethylenterephthalat und Polybutylenterephthalat Anwendung finden. Geeigent sind im Rahmen der vorliegenden Erfindung auch Polyester aus einer Dicarbonsäure wie beispielsweise Adipinsäure oder Sebacinsäure und einem Diol.

Bevorzugt haben die als Polymer (PM) eingesetzten Polyole eine mittlere Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen oder Amingruppen auf.

Das Mischungsverhältnis des Polymers (PM) und des Triblockcopolymers kann erfindungsgemäß in weiten Bereichen variieren.

Bevorzugt wird als Polymer (PM) erfindungsgemäß ein Polyol eingesetzt, dass in der chemischen Struktur dem Block B ähnelt. Sofern der Block B ausgewählt ist aus Polyethern wird als Polymer (PM) vorzugsweise ein Polyether eingesetzt. Sofern der Block B ausgewählt ist aus Polyestern, ist das Polymer (PM) vorzugsweise ausgewählt aus der Gruppe bestehend aus Polyestern.

Vorzugsweise wird als Polymer (PM) ein Polyether eingesetzt, wobei insbesondere Polytetramethylenoxide vorteilhaft sind. Geeignete Polytetramethylenoxide oder Derivate davon sind dem Fachmann an sich bekannt. Bevorzugte Polyetherole sind erfindungsgemäß Polyethyleneglykole, Polypropylenglykole und Polytetramethylenoxide, sowie deren M ischpolyetherole.

Gemäß einer weiteren Ausführungsform betrifft die vorliegende Erfindung demgemäß ein Blockcopolymer wie zuvor beschrieben, wobei der Block B und das Polymer (PM) ausgewählt sind aus der Gruppe bestehend aus Polyethern.

Sofern ein Polymer (PM) eingesetzt wird, kann das Mischungsverhältnis des Triblockcopolymers und des Polymers (PM) in weiten Bereichen variieren. Üblicherweise wird das Triblockcopolymer in einer Menge im Bereich von 20 bis 80 Gew.-% bezogen auf die Summe der Menge des Triblockcopolymers und des Polymers (PM) eingesetzt

Gemäß einer weiteren Ausführungsform betrifft die vorliegende Erfindung demgemäß ein Blockcopolymer wie zuvor beschrieben, wobei das Triblockcopolymer in einer Menge im Bereich von 20 bis 80 Gew.-% bezogen auf die Summe der Menge des Triblockcopolymers und des Polymers (PM) eingesetzt wird.

Gemäß einer weiteren Ausführungsform betrifft die vorliegende Erfindung ein Blockcopolymer wie zuvor beschrieben, wobei das zahlenmittlere Molekulargewicht Mn des Polymers (PM), insbesondere des Polytetramethylenoxids im Bereich von 500 bis 3500 g/mol liegt, bevorzugt im Bereich von 500 bis 3000 g/mol.

Vorzugsweise wird ein Polymer (PM) eingesetzt, das ein ähnliches Molekulargewicht aufweist wie das Triblockcopolymer ABA'.

Gemäß einer weiteren Ausführungsform betrifft die vorliegende Erfindung demgemäß ein Blockcopolymer wie zuvor beschrieben, wobei das zahlenmittlere Molekulargewicht des Polymers (PM) im Bereich von 80 bis 120% des zahlenmittleren Molekulargewichts des Triblockcopolymers ABA` liegt, bevorzugt im Bereich von 90 bis 100 %, weiter bevorzugt im Bereich von 95 bis 105%, besonders bevorzugt bei ungefähr 100 %.

Erfindungsgemäß ist der Block (P2) ausgewählt aus der Gruppe bestehend aus Polyestern und Polyamiden. Polyamid bedeutet im Sinne der Erfindung Homopolyamide und Copolyamide; d.h. Kondensationsprodukte von Lactamen, Aminosäuren oder Disäuren mit Diaminen und im allgemeinen jedes Polymer, das durch Einheiten gebildet wird, die durch Amidgruppen miteinander verbunden sind.

Gemäß einer weiteren Ausführungsform betrifft die vorliegende Erfindung demgemäß ein Blockcopolymer wie zuvor beschrieben, wobei der Block (P2) ein Polyamid-Block ist erhalten oder erhältlich durch Umsetzung einer ausgewählt aus der Gruppe bestehend aus aliphatischen, teilaromatischen und aromatischen Polyamiden.

Geeignete Polyamide sind an sich bekannt. Erfindungsgemäß kann das Polyamid auch ein Copolyamid umfassen. Geeignet ist beispielsweise ein Polyamidblock, der mindestens eines der folgenden Moleküle enthält: Amino-11-undecansäure, n-Heptylamino-11-undecansäure, Bernsteinsäure, Azelainsäure, Sebacinsäure, Dodecandisäure , Myristinsäure, Tetradecandisäure, Hexadecandisäure, Octadecandisäure, Butandiamin, Pentandiamin, Decamethylendiamin, Fettsäure (n), Fettsäuredimer (n) und Gemische davon. Vorteilhafterweise umfasst der mindestens eine Polyamidblock mindestens ein Monomer, ausgewählt aus den folgenden Polyamidmonomeren: 11, 5.4, 5.9, 5.10, 5.12, 5.13, 5.14, 5.16, 5.18, 5.36, 6.4, 6.9, 6.10, 6.12, 6.13. 6.14, 6.16, 6.18, 6.36, 10.4, 10.9, 10.10, 10.12, 10.13, 10.14, 10.16, 10.18, 10.36, 10. T, 12.4, 12.9, 12.10, 12.12, 12.13, 12.14, 12.16, 12.18, 12.36, 12. T und Mischungen oder Copolymere davon.

Erfindungsgemäß kann der Block (P2) gemäß einer weiteren Ausführungsform auch ausgewählt sein aus Polyestern.

Geeignete Polyester sind dem Fachmann an sich bekannt. Geeignet sind beispielsweise aromatische, aliphatische oder aliphatisch-aromatische Polyester. Beispielsweise werden geeignete aromatische Polyester durch Umesterung erhalten. Vorzugsweise kann der Polyester (PE-1) im Rahmen der vorliegenden Erfindung durch Umesterung erhalten werden. Im Rahmen der vorliegenden Erfindung wird dabei unter dem Begriff Umesterung verstanden, dass ein Polyester mit einer Verbindung mit zwei zeriwitinoff-aktiven Wasserstoffatomen umgesetzt wird, beispielsweise einer Verbindung mit zwei OH-Gruppen oder zwei N H-Gruppen oder einer Verbindung mit einer OH- und einer NH-Gruppe.

Erfindungsgemäß ist es auch möglich, dass der Polyester ein Copolymer umfasst. Vorteilhafterweise umfasst der mindestens eine Polyesterblock mindestens eines der folgenden Moleküle: Ethylenglykol, 1,3-Propandiol, 1,4-Butandiol, 1,10-Decandiol, dimerisierte Fettsäure, reduziert zum Erhalt des entsprechenden Diols, 2. 5-Furandicarbonsäure, Bernsteinsäure, Azelainsäure, Sebacinsäure, Dodecandisäure, Myristinsäure, Tetradecandisäure, Hexadecandisäure, Octadecandisäure und / oder dimerisierte Fettsäuren.

Polyester bedeutet im Sinne der Erfindung die Produkte der Kondensation von Dicarbonsäuren mit Diolen und in der Regel jedes Polymer, dessen makromolekulares Grundgerüst Wiederholungseinheiten enthält, die die chemische Esterfunktion enthalten.

Die Polyesterblöcke werden üblicherweise durch Polykondensation zwischen einer Dicarbonsäure und einem Diol hergestellt. Geeignete Carbonsäuren umfassen die vorstehend genannten, die zur Bildung der Polyamidblöcke verwendet werden. Geeignete Diole umfassen lineare aliphatische Diole wie Ethylenglykol, 1,3-Propylenglykol, 1,4-Butylenglykol, 1,6-Hexylenglykol, verzweigte Diole wie Neopentylglykol, 3-Methylpentanglykol, 1,2-Propylenglykol, und cyclische Diole wie 1,4-Bis (hydroxymethyl) cyclohexan und 1,4-Cyclohexandimethanol.

Geeignet sind beispielsweise Polyesterblöcke, die aus der Reaktion von mindestens einer Dicarbonsäure mit mindestens einer kettenverlängernden kurzen Dioleinheit resultieren. Die Polyesterblöcke und Polyetherblöcke sind üblicherweise durch Esterbindungen verbunden, die aus der Reaktion der Säurefunktionen der Dicarbonsäure mit den OH-Funktionen des Polyetherdiols resultieren. Das kettenverlängernde kurze Diol kann ausgewählt sein aus der Gruppe bestehend aus Neopentylglykol, Cyclohexandimethanol und aliphatischen Glykolen. Die Kette aus Polyethern und Disäuren bildet die flexiblen Blöcke, während die Kette aus Glykol oder Butandiol mit den Disäuren die starren Blöcke des Copolyetheresters bildet.

Als Beispiele für aromatische Dicarbonsäuren seien Terephthalsäure, Isophthalsäure, Dibenzoesäure, Naphthalindicarbonsäure, 4,4'-Diphenylendicarbonsäure, Bis (p-carboxyphenyl) methansäure, Ethylen-bis-p-benzoesäure 1 genannt 4-Tetramethylen-bis (p-oxybenzoesäure), Ethylen-bis (p-oxybenzoesäure), 1,3-Trimethylen-bis (p-oxybenzoesäure). Als Beispiele für Glykole können Ethylenglykol, 1,3-Trimethylenglykol, 1,4-Tetramethylenglykol, 1,6-Hexamethylenglykol, 1,3-Propylenglykol, 1,8-Octamethylenglykol, 1,10- Decamethylenglykol und 1,4-Cyclohexylendimethanol.

Als Polyester geeignet sind auch die Polyalkylenterephthalate von Alkandiolen mit 2 bis 6 Kohlenstoffatomen, insbesondere aromatische Polyester ausgewählt aus der Gruppe bestehend aus Polybutylenterephthalat (PBT), Polyethylenterephthalat (PET) und Polyethylennaphtalat (PEN), so dass bevorzugt Polyethylenterephthalat und insbesondere bevorzugt Polybutylenterephthalat oder Mischungen aus Polyethylenterephthalat und Polybutylenterephthalat Anwendung finden.

Gemäß einer weiteren Ausführungsform betrifft die vorliegende Erfindung demgemäß ein Blockcopolymer wie zuvor beschrieben, wobei der Block (P2) ein Polyester-Block ist erhalten oder erhältlich durch Umsetzung einer ausgewählt aus der Gruppe bestehend aus Polybutylenterephthalaten und Polyethylenterephthalaten.

Erfindungsgemäß kann die Blocklänge des Blocks (B2) in weiten Bereichen variieren.

Erfindungsgemäß weist das Blockcopolymer beispielsweise ein gewichtsmittleres Molekulargewicht Mw im Bereich von 5000 bis 150000 g/mol auf, bevorzugt im Bereich von 10000 bis 120000 g/mol oder auch im Bereich von 30000 bis 100000 g/mol.

Soweit nicht anders angegeben erfolgt im Rahmen der vorliegenden Erfindung die Bestimmung der gewichtsmittleren Molekulargewichte Mw der thermoplastischen Block-Copolymere, gelöst in HFIP (Hexafluorisopropanol) mittels GPC. Die Bestimmung des Molekulargewichts erfolgt mittels zwei hintereinandergeschalteter GPC-Säulen (PSS-Gel; 100A; 5µ; 300*8mm, Jordi- Gel DVB; MixedBed; 5µ; 250*10mm; Säulentemperatur 60°C; Fluss 1 mL/min; RI-Detektor). Dabei erfolgt die Kalibrierung mit Polymethylmethacrylat (EasyCal; Fa. PSS, Mainz), als Laufmittel wird HFIP verwendet.

Gemäß einem weiteren Aspekt betrifft die vorliegende Erfindung auch ein Verfahren zur Herstellung eines Blockcopolymers mindestens enthaltend einen Block (P1), der erhalten oder erhältlich ist durch Umsetzung eines Triblockcopolymers mit der Struktur A-B-A', wobei Block B ausgewählt ist aus Polyethern oder Polyestern und die Blöcke A und A' gleich oder verschieden sind und mindestens eines Polymers (PM) ausgewählt aus der Gruppe bestehend aus Polyestern und Polyethern, und einen Block (P2) der ausgewählt ist aus der Gruppe bestehend aus Polyamiden und Polyestern, umfassend die Umsetzung einer Zusammensetzung enthaltend ein Triblockcopolymer A-B-A' und ein Polymer (PM) ausgewählt aus der Gruppe bestehend aus Polyestern und Polyethern.

Bezüglich bevorzugter Ausführungsformen wird auf die obigen Ausführungen zu bevorzugten Einsatzstoffen und Reaktionsbedingungen Bezug genommen.

Das erfindungsgemäße Verfahren kann mehrere Schritte umfassen, beispielsweise Bereitstellen einer Mischung enthaltend das Triblockcopolymer und ein Polymer (PM) und die Umsetzung des Triblockcpolymers und des Polymers (PM) mit einer geeigneten Verbindung zum Aufbau des Blockcopolymers. Beispielsweise kann der Aufbau des Blockcopolymers durch Kupplung eines Polyamidblocks oder Polyesterblocks mit dem Triblockcopolymer bzw. dem Polymer (PM) erfolgen oder der Aufbau des Blockcopolymers kann durch Vorlegen einer Zusammensetzung enthaltend das Triblockcopolymers und das Polymer (PM) und den Aufbau des Blocks (P2) durch Zugabe geeigneter Monomere erfolgen.

Unterschiedliche Herstellmethoden sind Stand der Technik grundsätzlich bekannt. Hierzu kann der beispielsweise das Triblockcopolymer und Polymer (PM) vorgelegt werden und die Polyamid oder Polyesterblöcke können aufpolymerisiert werden, wobei die Endfunktionalität des Triblockcopolymers angepasst werden kann, beispielsweise kann durch die Reaktion der Hydroxylfunktion mit Maleinsäureanhydrid, über Diisocyanate oder andere Kopplungsreagenzien. Geeignete Verfahren sind an sich bekannt, beispielsweise auch Umesterung oder Transamidierung.

Sofern das Blockcopolymer ein Polyamid als Block (P2) aufweist, kann der Aufbau beispielsweise erfolgen über Polykondensation von Polyamidblöcken mit reaktiven Enden mit Polyetherblöcken mit reaktiven Enden, wie unter anderem Polyamidblöcken mit Diaminkettenenden mit Polyoxyalkylenblöcken mit Dicarbonsäurekettenenden, Polyamidblöcke mit Dicarbonsäurekettenenden mit Polyoxyalkylenblöcken mit Diaminkettenenden, erhalten durch Cyanoethylierung und Hydrierung von aliphatischen dihydroxylierten alpha-omega-Polyoxyalkylenblöcken, genannt Polyetherdiole, oder Polyamidblöcke mit Dicarbonsäurekettenenden mit Polyetherdiolen.

Die Polyamidblöcke mit Dicarbonsäurekettenenden sind beispielsweise erhältlich aus der Kondensation von Vorläufern von Polyamiden in Gegenwart einer kettenbegrenzenden Dicarbonsäure. Die Polyamidblöcke mit Diaminkettenenden werden beispielsweise aus der Kondensation von Vorläufern von Polyamiden in Gegenwart eines kettenbegrenzenden Diamins erhalten. Das zahlenmittlere Molekulargewicht Mn der Polyamidblöcke liegt im Bereich von 400 bis 20 000 g / mol, bevorzugt von 500 bis 10 000 g / mol und besonders bevorzugt von 600 bis 6000 g / mol.

Erfindungsgemäß sind die Polyamidblöcke beispielsweise erhältlich aus der Kondensation von mindestens einer Dicarbonsäure (aliphatisch, cycloaliphatisch oder aromatisch) ab, insbesondere solchen mit 4 bis 36 Kohlenstoffatomen, vorzugsweise solchen mit 6 bis 18 Kohlenstoffatomen und aus mindestens ein Diamin (aliphatisch, cycloaliphatisch oder aromatisch), ausgewählt insbesondere aus solchen mit 2 bis 20 Kohlenstoffatomen, vorzugsweise solchen mit 6 bis 15 Kohlenstoffatomen. Als Beispiele für aliphatische Disäuren können Butandisäure, Adipinsäure, Suberinsäure, Azelainsäure, Sebacinsäure, Dodecandicarbonsäure, Myristinsäure, Tetradecandicarbonsäure, Hexadecandicarbonsäure, Octadecandicarbonsäure und die dimerisierten Fettsäuren genannt werden. Als Beispiele für cycloaliphatische Disäuren können wir 1,4-Cyclohexyldicarbonsäure nennen. Als Beispiele für aromatische Disäuren können Terephthalsäure (T) und Isophthalsäure (I) genannt werden. Als Beispiele für aliphatische Diamine können Tetramethylendiamin, Hexamethylendiamin, 1,10-Decamethylendiamin, Dodecamethylendiamin, Trimethylhexamethylendiamin genannt werden.

Als Beispiele für cycloaliphatische Diamine können die Isomere von Bis- (4-aminocyclohexyl) methan (BACM oder PACM), Bis- (3-methyl-4-aminocyclohexyl) methan (BMACM oder MACM) und 2-2 genannt werden -bis- (3-methyl-4-aminocyclohexyl) propan (BMACP), Isophorondiamin (IPDA), 2,6-Bis (aminomethyl) norbornan (BAMN) und Piperazin (Pip).

Vorteilhafterweise enthält das erfindungsgemäße Copolymer mindestens einen PA-Block auf Basis von PA 4.4, PA 4.6, PA 4.9, PA 4.10, PA 4.12, PA 4.14, PA 4.16, PA 4.18, PA 4.36, PA 6.4, PA 6.6, PA 6.9, PA 6.10, PA 6.12, PA 6.13, PA 6.14, PA 6.16, PA 6.18, PA 6.36, PA 9.4, PA 9.6, PA 9.10, PA 9.12, PA 9.14, PA 9.18, PA 9.36, PA 10.4, PA 10.6, PA 10.9, PA 10.10, PA 10.12, PA 10.13, PA 10.14, PA 10.16, PA 10.18, PA 10.36, PA 10. T, PA BMACM.4, PA BMACM.6, PA BMACM.9, PA BMACM.10, PA BMACM.12, PA BMACM.14, PA BMACM.16, PA BMACM.18, PA BMACM.36, PA PACM. 4, PA PACM.6, PA PACM.9, PA PACM.10, PA PACM.12, PA PACM.14, PA PACM.16, PA PACM.18, PA PACM.36, PA Pip.4, PA Pip. 6, PA Pip.9, PA Pip.10, PA Pip.12, PA Pip.14, PA Pip.16, PA Pip.18 und / oder PA Pip.36 und Mischungen davon.

Gemäß einer alternativen Ausführungsform sind die Polyamidblöcke beispielsweise erhältlich aus der Kondensation einer oder mehrerer alpha-omega-Aminocarbonsäuren und / oder eines oder mehrerer Lactame mit 6 bis 12 Kohlenstoffatomen in Gegenwart einer Dicarbonsäure mit 4 bis 12 Kohlenstoffatomen oder eines Diamins. Als Beispiele für Lactame können Caprolactam, Enantholactam und Lauryllactam genannt werden. Als Beispiele für Alpha-Omega-Aminocarbonsäuren können die Aminocapronsäure, die Amino-7-Heptansäure, die Amino-11-Undecansäure und die Amino-12-Dodecansäure genannt werden.

Vorteilhafterweise bestehen die Polyamidblöcke des zweiten Typs aus Polyamid 11, Polyamid 12 oder Polyamid 6.

Gemäß einem dritten Typ resultieren die Polyamidblöcke aus der Kondensation mindestens eines Monomers des ersten Typs mit mindestens einem Monomer des zweiten Typs. Mit anderen Worten resultieren die Polyamidblöcke aus der Kondensation mindestens einer alpha-omega-Aminocarbonsäure (oder eines Lactams) mit mindestens einem Diamin und einer Dicarbonsäure.

In diesem Fall werden die PA-Blöcke durch Polykondensation hergestellt: aus aliphatischen, cycloaliphatischen oder aromatischen Diaminen mit X Kohlenstoffatomen; von Dicarbonsäure (n) mit Y Kohlenstoffatomen; und von Comonomer (en) {Z}, ausgewählt aus Lactamen und alpha-omega-Aminocarbonsäuren mit Z Kohlenstoffatomen; in Gegenwart eines Kettenbegrenzers ausgewählt aus Dicarbonsäuren oder Diaminen oder eines Überschusses an Disäure oder Diamin als Struktureinheit.

Vorteilhafterweise wird als Kettenbegrenzer eine Dicarbonsäure mit Y-Kohlenstoffatomen eingesetzt, die im Überschuß bezogen auf die Stöchiometrie des Diamins oder der Diamine eingeführt wird.

Gemäß einer weiteren Ausführungsform resultieren die Polyamidblöcke aus der Kondensation von mindestens zwei verschiedenen alpha-omega-Aminocarbonsäuren oder von mindestens zwei verschiedenen Lactamen mit 6 bis 12 Kohlenstoffatomen oder von einem Lactam und einer nicht gleichen Aminocarbonsäure Anzahl der Kohlenstoffatome gegebenenfalls in Gegenwart eines Kettenbegrenzers.

Als Beispiele für Polyamidblöcke des dritten Typs können diejenigen genannt werden, die durch die folgenden Polyamide (Copolyamide) gebildet werden: PA 6 / 6.6, worin 6 Caprolactam und 6.6 ein Monomer bedeutet, das aus der Kondensation von Hexamethylendiamin mit Adipinsäure resultiert. PA 6.6 / Pip.10 / 12, worin 6.6 ein Monomer bedeutet, das aus der Kondensation von Hexamethylendiamin mit Adipinsäure resultiert. Pip.10 bezeichnet ein Monomer, das aus der Kondensation von Piperazin mit Sebacinsäure resultiert. 12 bezeichnet Lauryllactam. PA 6.6 / 6.10 / 11/12, worin 6.6 ein Monomer bedeutet, das aus der Kondensation von Hexamethylendiamin mit Adipinsäure resultiert. 6.10 bezeichnet ein Monomer, das aus der Kondensation von Hexamethylendiamin mit Sebacinsäure resultiert. 11 bezeichnet Amino-11-undecansäure. 12 bezeichnet Lauryllactam.

Als Beispiele können auch PA 10.10 / 11, PA 6.10 / 11, PA 10.12 / 11, PA 10.10 / 11/12, PA 6.10/ 10.10/ 11, PA 6.10/6.12/ 11, PA 6.10 / 6.12 / 10.10 genannt werden.

Insbesondere umfasst die Herstellung der erfindungsgemäßen Blockcopolymere mit Polyamidblock und einem Triblockcopolymer mit einem Block B, der ausgewählt ist aus Polyethern alle Mittel zur Anbindung der erfindungsgemäßen Polyamidblöcke und Triblockcopolymere. In der Praxis werden im wesentlichen zwei Verfahren angewendet: ein zweistufiges Verfahren und ein einstufiges Verfahren.

In dem einstufigen Verfahren werden die Polyamidvorläufer, der Kettenbegrenzer und das Triblockcopolymer zusammengemischt.

So werden auch Polyamidblöcke im einstufigen Verfahren hergestellt. Die gleichzeitige Polykondensation der Blöcke ABA' und der Vorstufen der Polyamidblöcke wird vorzugsweise bei einer Temperatur von 180 bis 300 ° C durchgeführt. Man erhält dann ein Polymer mit im wesentlichen Blöcken sehr variabler Länge, aber auch den verschiedenen zufällig reagierte Reaktanten, die statistisch (zufällig) entlang der Polymerkette verteilt sind.

Erfindungsgemäß können für die Kupplungsreaktion auch Katalysatoren eingesetzt werden. Geeignete Katalysatoren oder weitere Hilfs- und Zusatzstoffe sind dem Fachmann an sich bekannt.

Im zweistufigen Verfahren werden zuerst die Polyamidblöcke hergestellt, dann werden in einer zweiten Stufe die Polyamidblöcke und Triblockcopolymere angebracht. Die erfindungsgemäßen Triblockcopolymere werden entweder so wie sie sind und mit Polyamidblöcken mit Carbonsäureenden copolykondensiert oder sie werden aminiert, in Polyetherdiamine umgewandelt und mit Polyamidblöcken mit Carbonsäureenden kondensiert.

Die Umsetzungsreaktion zur Bildung des PA-Blocks wird üblicherweise zwischen 180 und 300 ° C, vorzugsweise zwischen 200 und 290 ° C durchgeführt, der Druck im Reaktor wird zwischen 5 und 30 bar eingestellt und es wird etwa 2 bis 5 bar aufrechterhalten 3 Stunden. Der Druck wird langsam verringert, wobei der Reaktor Atmosphärendruck ausgesetzt wird, und dann wird das überschüssige Wasser beispielsweise für eine oder zwei Stunden abdestilliert.

Erfindungsgemäß geeignet sind insbesondere solche Polyamide, die einerseits gut auskristallisieren und/oder hydrophober sind, sodass einerseits Wasseraufnahme der Hartphase des finalen Blockcopolymers reduziert wird und andererseits eine ausgeprägte Phasenseparation erzielt wird, wie beispielsweise PA12.

Sofern der Block (P2) ein Polyesterblock ist, kann der Aufbau des erfindungsgemäßen Blockcopolymers beispielsweise durch eine Kupplung geeigneter Blöcke, beispielsweise durch Umsesterung erfolgen oder der Block (P2) kann durch eine Veresterungsreaktion aufgebaut werden. Geeignete Verfahren und Reaktionsbedingungen sind dem Fachmann an sich bekannt.

Die vorliegende Erfindung betrifft gemäß einem weiteren Aspekt auch ein Blockcopolymer, erhalten oder erhältlich gemäß einem erfindungsgemäßen Verfahren.

Die Verarbeitung der erhaltenen Blockcopolymere kann gemäß üblichen Verfahren erfolgen, beispielsweise auf Extrudern, Spritzgussmaschinen, Blasformen, Kalandern, Knetern und Pressen.

Dabei können erfindungsgemäß dem Blockcopolymer weitere Hilfs- oder Zusatzstoffe zugesetzt werden oder das erfindungsgemäße Blockcopolymer kann in Mischungen mit weiteren Polymeren verarbeitet werden.

Im Falle von Verträglichkeitsvermittlern oder Hilfsstoffen wie zum Beispiel Stabilisatoren können diese auch bei der Herstellung der Komponenten in diese bereits eingearbeitet werden. Üblicherweise werden die einzelnen Komponenten vor dem Mischverfahren zusammengegeben oder in den Apparat der das Mischen übernimmt eindosiert. Im Falle eines Extruders werden die Komponenten alle in den Einzug dosiert und gemeinsam in den Extruder gefördert oder einzelne Komponenten über eine Seitendosierung zugegeben.

Die Verarbeitung erfolgt bei einer Temperatur bei welcher die Komponenten in einem plastifizierten Zustand vorliegen. Die Temperatur hängt von den Erweichungs- bzw. Schmelzbereichen der Komponenten ab, muss jedoch unterhalb der Zersetzungstemperatur jeder Komponente liegen. Additive wie Pigmente oder Füllstoffe oder weitere der oben genannten üblichen Hilfsstoffe wie beispielsweise Flammschutzmittel oder antistatische Hilfsmittel, werden nicht mit aufgeschmolzen, sondern im festen Zustand eingearbeitet.

Hierbei sind weitere Ausführungsformen nach gängigen Methoden möglich, wobei die bei der Herstellung der Ausgangsmaterialien verwendeten Prozesse mit in die Herstellung direkt einbezogen werden können. So wäre es z.B. möglich im Falle des Bandverfahrens, direkt am Ende des Bandes, bei dem das Material in einen Extruder eingespeist wird, um Linsengranulat zu erhalten, das das Polymerisat, den Zähmodifizierer sowie Füllstoffe, Vernetzer, Flammschutzmittel, weitere Zusatzstoffe oder Farbstoffe einzubringen.

In diesem Schritt können einige der oben genannten üblichen Hilfsstoffe der Mischung hinzugefügt werden.

Aufgrund der guten mechanischen Eigenschaften und des guten Temperaturverhaltens sind die erfindungsgemäßen Blockcopolymere insbesondere zur Herstellung von Extrusions-, Spritzguss- und Pressartikeln sowie Schäumen, Schaumpartikeln, Schuhsohlen, Skischuhe, Skifolien, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel geeignet.

Gemäß einem weiteren Aspekt betrifft die vorliegende Erfindung auch die Verwendung eines erfindungsgemäßen Blockcopolymers oder eines Blockcopolymers, erhalten oder erhältlich nach einem erfindungsgemäßen Verfahren zur Herstellung eines Formkörpers. Gemäß einem weiteren Aspekt betrifft die vorliegende Erfindung auch die Verwendung eines erfindungsgemäßen Blockcopolymers oder eines Blockcopolymers, erhalten oder erhältlich nach einem erfindungsgemäßen Verfahren zur Herstellung von Extrusions-, Spritzguss- und Pressartikeln sowie Schäumen, Schaumpartikeln, Schuhsohlen, Kabelummantelungen, Schläuchen, Profilen, Antriebsriemen, Fasern, Vliesen, Folien, Formteilen, Steckern, Gehäusen, Dämpfungselementen für Elektroindustrie, Automobilindustrie, Maschinenbau, 3D-Druck, Medizin und Konsumartikel.

Gemäß einem weiteren Aspekt betrifft die vorliegende Erfindung auch Formkörper, umfassend ein Blockcopolymer wie zuvor beschrieben oder ein Blockcopolymer erhalten oder erhältlich nach einem erfindungsgemäßen Verfahren.

Erfindungsgemäß kann der Formkörper aus einem kompakten Material bestehen. Es ist jedoch im Rahmen der vorliegenden Erfindung ebenso möglich, dass der Formkörper aus einem zumindest teilweise geschäumten Material besteht. Erfindungsgemäß kann der Formkörper beispielsweise in kompakter Form vorliegen oder in Form eines Partikelschaums, geschäumten Formteils wie über den Schaumspritzguss erhalten, geschäumten Halbzeugs wie über einen Imprägnierprozess im Autoklaven oder die Schaumextrusion mittels Profildüse oder auch in Form eines Blockschaums. Verfahren zur Herstellung geschäumter Materialien, insbesondere geschäumter Elastomere sind an sich bekannt. Geeignete Bedingungen sind dem Fachmann an sich bekannt.

Gemäß einer weiteren Ausführungsform betrifft die vorliegende Erfindung demgemäß auch die Verwendung eines erfindungsgemäßen Blockcopolymers oder eines Blockcopolymers, erhalten oder erhältlich nach einem erfindungsgemäßen Verfahren zur Herstellung eines Formkörpers, wobei der Formkörper zumindest teilweise in Form eines Schaums oder Partikelschaums vorliegt.

Im Rahmen der vorliegenden Erfindung ist es ebenso möglich, zunächst ein Granulat umfassend das Blockcopolymer herzustellen und anschließend ein geschäumtes Granulat herzustellen. Demgemäß ist es auch möglich, dass der Formkörper in Form eins geschäumten Granulats vorliegt.

Das Blockcopolymer der Erfindung kann auch allein oder als Mischung verwendet werden, wobei das Copolymer 5 bis 100 Masse-%, vorzugsweise 5 bis 70 Masse-%, vorzugsweise 5 bis 30 Masse-% der Gesamtmasse der Mischung ausmacht.

Weiterhin betrifft die vorliegende Erfindung demgemäß gemäß einem weiteren Aspekt auch ein geschäumtes Granulat umfassend ein Blockcopolymer erhältlich oder erhalten gemäß einem erfindungsgemäßen Verfahren oder ein erfindungsgemäßes Blockcopolymer.

Die erfindungsgemäßen geschäumten Granulate lassen sich gut zu Formkörpern verarbeiten. Insbesondere hat sich gezeigt, dass die geschäumten Granulate gut verschweißbar sind. Gemäß einem weiteren Aspekt betrifft die vorliegende Erfindung auch einen Formkörper aus einem geschäumten Granulat wie zuvor beschrieben.

Erfindungsgemäß ist es beispielsweise möglich, dass zunächst ein Granulat umfassend das erfindungsgemäße Blockcopolymer hergestellt wird und anschließend aus dem Granulat ein geschäumtes Granulat. Ebenso ist es möglich, aus der Schmelze einen Blockschaum oder Partikelschaum herzustellen. Geeignete Verfahren sind dem Fachmann an sich bekannt und beispielsweise beschrieben in WO 2007/082838 A1, WO2013/153190 A1, WO 2015/052265 A1 oder WO 2015/055811 A1.

Weiterhin betrifft die vorliegende Erfindung die Verwendung eines Blockcopolymers erhältlich oder erhalten gemäß einem erfindungsgemäßen Verfahren oder eines erfindungsgemäßen Blockcopolymers zur Herstellung eines Formkörpers oder eines geschäumten Granulats.

Es wurde überraschend gefunden, dass sich die erfindungsgemäßen Formkörper und geschäumten Granulate durch niedrige Bauteildichten, gute Rückprallelastizitäten und gute Kälteflexibilität auszeichnen, Die geschäumten Granulate weisen weiterhin eine niedrige Schüttdichte auf.

Die Herstellung der geschäumten Granulate kann nach den gängigen im Stand der Technik bekannten Verfahren erfolgen.

Die erfindungsgemäßen geschäumten Granulate weisen in der Regel eine Schüttdichte von 20 g/l bis 200 g/l, bevorzugt 50 g/l bis 180 g/l, besonders bevorzugt 60 g/l bis 150 g/l.

Wie oben ausgeführt, liegt der Durchmesser der geschäumten Granulate zwischen 0,5 bis 20 bevorzugt 1 bis 15 und insbesondere zwischen 3 bis 12 mm. Bei nicht kugelförmigen, z.B. länglichen oder Zylinder förmigen geschäumten Granulaten ist mit Durchmesser die längste Abmessung gemeint.

Gemäß einer weiteren Ausführungsform betrifft die vorliegende Erfindung demgemäß ein geschäumtes Granulat wie zuvor beschrieben, wobei der mittlere Durchmesser der Partikel im Bereich von 0,5 bis 20 mm liegt.

Bevorzugt weist das nicht expandierte Granulat hierbei einen durchschnittlichen minimalen Durchmesser von 0,2 - 10 mm auf (bestimmt über 3D Evaluierung des Granulates, z.B. über dynamic image analysis mit der Verwendung einer optischen Messapparatur mit Namen PartAn 3D von Microtrac).

Die einzelnen Granulate haben in der Regel eine mittlere Masse im Bereich von 0,1 bis 100 mg, beispielsweise im Bereich von 1 bis 50 mg, bevorzugt im Bereich von 4 bis 40 mg und besonders bevorzugt im Bereich von 7 bis 32 mg. Diese mittlere Masse der Granulate (Partikelgewicht) wird als arithmetisches Mittel durch 3-maliges Wiegen von jeweils 10 Granulatpartikeln bestimmt.

Die geschäumten Granulate, werden insbesondere zur Herstellung von Formkörpern aus Partikelschaumstoffen genutzt. Gemäß einem weiteren Aspekt betrifft die vorliegende Erfindung auch einen Formkörper aus einem geschäumten Granulat wie zuvor beschrieben. Verfahren zur Herstellung von derartigen Formkörpern sind an sich bekannt.

Gemäß einem weiteren Aspekt betrifft die vorliegende Erfindung auch die Verwendung eines erfindungsgemäßen geschäumten Granulats oder eines geschäumten Granulats, erhalten oder erhältlich nach einem erfindungsgemäßen Verfahren zur Herstellung von Formkörpern. Gemäß einer weiteren Ausführungsform betrifft die vorliegende Erfindung gemäß auch die Verwendung eines erfindungsgemäßen geschäumten Granulats oder eines geschäumten Granulats, erhalten oder erhältlich nach einem erfindungsgemäßen Verfahren zur Herstellung von Formkörpern, wobei die Herstellung des Formkörpers mittels Verschweißen oder Verkleben der Partikel miteinander erfolgt.

Gemäß einem weiteren Aspekt betrifft die vorliegende Erfindung auch die Verwendung eines erfindungsgemäßen geschäumten Granulats zur Herstellung eines Formkörpers. Weiterer Gegenstand der vorliegenden Erfindung ist ein Formkörper hergestellt aus den erfindungsgemäßen geschäumten Granulaten.

Ein erfindungsgemäß geeignetes Verfahren zur Herstellung eines Formkörpers aus einem geschäumten Granulat umfasst beispielsweise die folgenden Schritte:
(A) Einbringen der erfindungsgemäßen geschäumten Granulate in einer entsprechenden Form,
(B) Fusionierung der erfindungsgemäßen geschäumten Granulate aus Schritt (i).

Die Fusionierung in Schritt (B) erfolgt vorzugsweise in einer geschlossenen Form, wobei die Fusionierung durch Wasserdampf, Heißluft, Heißpressen oder energetische Strahlung (Mikrowellen oder Radiowellen) erfolgen kann.

Geeignete Bedingungen sind dem Fachmann an sich bekannt. Im Rahmen der vorliegenden Erfindung werden die Bedingungen üblicherweise so gewählt, dass das Material ausreichend erweicht, um zu einer stabilen Verbindung zu führen, aber nicht zu stark, damit die Zellstruktur nicht kollabiert.

Wie oben ausgeführt, haben die erfindungsgemäßen Formteile vorteilhafte Eigenschaften für die oben genannten Anwendungen im Schuh bzw. Sportschuhbereich Bedarf.

Hierbei sind die Zug- und Kompressionseigenschaften der aus den geschäumten Granulaten hergestellten Formkörper dadurch gekennzeichnet, dass die Zugfestigkeit oberhalb 600 kPa liegt (ASTM D 5035), die Reißdehnung oberhalb von 100 % liegt (ASTM D 503) und die Druckspannung oberhalb von 15 kPa bei 10 % Stauchung liegt (analog DIN EN ISO 844, November 2014; die Abweichung zur Norm liegt in der Höhe der Probe mit 20 mm anstatt von 50 mm und somit der Anpassung der Prüfgeschwindigkeit auf 2 mm/min).

Die erfindungsgemäßen geschäumten Granulate lassen sich insbesondere gut zu Schuhsohlen, einem Teil einer Schuhsohle, Matratzen, Sitzpolstern, Unterlagen, Griffen, Schutzfolien, Bauteilen im Automobilinnen- und -außenbereich, Gymnastikmatten, Körperprotektoren, Auskleidungselementen im Automobilbau, Schalldämpfer, Schwingungsdämpfer, Polsterungen, Fahrradsatteln, in Spielzeugen, Reifen oder Reifenteilen oder als Belag für eine Leichtathletiklaufbahn, eine Sporthalle oder einen Gehweg, eine dämpfende Schicht oder ein dämpfender Kern in einem Sandwichelement oder eine Verpackung verarbeiten.

Gemäß einer weiteren Ausführungsform betrifft die vorliegende Erfindung demgemäß auch die Verwendung der erfindungsgemäßen Blockcopolymere wie zuvor beschrieben, wobei der Formkörper eine Schuhsohle, ein Teil einer Schuhsohle, eine Matratze, Sitzpolster, Unterlage, Griff, Schutzfolie, ein Bauteil im Automobilinnen- und -außenbereich, eine Gymnastikmatte, ein Körperprotektor, ein Auskleidungselement im Automobilbau, ein Schalldämpfer, ein Schwingungsdämpfer, eine Polsterung, ein Fahrradsattel, ein Spielzeug, ein Reifen oder ein Reifenteil oder ein Belag für eine Leichtathletiklaufbahn, eine Sporthalle oder einen Gehweg, eine dämpfende Schicht oder ein dämpfender Kern in einem Sandwichelement oder eine Verpackung ist.

Gemäß einer weiteren Ausführungsform betrifft die vorliegende Erfindung demgemäß auch die Verwendung der erfindungsgemäßen Blockcopolymere wie zuvor beschrieben, wobei der Formkörper ein Spritzguss-, Extrusions- und Pressartikel, ein Schlauch, ein Kabel oder Teil eines Kabels, ein Aufzugs- oder Antriebsriemen, ein Förderband, ein Schlauch, Teil eines Schuhs, eine Folie, ein Vlies, Fasern, ein Skischuh oder Teil eines Skischuhs, eine Skifolien, ein Stecker, ein Dämpfungselement, Gehäuse, ein Formteil für Elektroindustrie, Automobilindustrie, Maschinenbau, 3D-Druck, Medizin und Konsumartikel und Sportartikeln ist.

Gemäß einem weiteren Aspekt betrifft die vorliegende Erfindung auch die Verwendung eines geschäumten Granulats wie zuvor beschrieben in Bällen und Sportgeräten oder als Bodenbelag und Wandverkleidung, insbesondere für Sportflächen, Leichtathletiklaufbahnen, Sporthallen, Kinderspielplätzen und Gehwegen.

Die erfindungsgemäß erhaltenen Formkörper eignen sich beispielsweise für die Herstellung von Schuhsohle, Teilen einer Schuhsohle, Fahrradsatteln, Polsterung, Matratzen, Unterlagen, Griffen, Schutzfolien, Bauteilen im Automobilinnen- und -außenbereich, in Bällen und Sportgeräten oder als Bodenbelag und Wandverkleidung, insbesondere für Sportflächen, Leichtathletiklaufbahnen, Sporthallen, Kinderspielplätzen und Gehwegen.

Gemäß einer weiteren Ausführungsform betrifft die vorliegende Erfindung gemäß auch die Verwendung eines erfindungsgemäßen geschäumten Granulats oder eines geschäumten Granulats, erhalten oder erhältlich nach einem erfindungsgemäßen Verfahren zur Herstellung von Formkörpern, wobei der Formkörper eine Schuhsohle, ein Teil einer Schuhsohle, ein Fahrradsattel, eine Polsterung, eine Matratze, Unterlage, Griff, Schutzfolie, ein Bauteil im Automobilinnen- und -außenbereich ist.

Gemäß einem weiteren Aspekt betrifft die vorliegende Erfindung auch die Verwendung der erfindungsgemäßen geschäumten Granulate oder geschäumten Partikeln in Bällen und Sportgeräten oder als Bodenbelag und Wandverkleidung, insbesondere für Sportflächen, Leichtathletiklaufbahnen, Sporthallen, Kinderspielplätzen und Gehwegen.

Die vorliegende Erfindung betrifft gemäß einem weiteren Aspekt auch ein Hybridmaterial, enthaltend eine Matrix aus einem Polymer (MM) und ein geschäumtes Granulat gemäß der vorliegenden Erfindung. Materialien, die ein geschäumtes Granulat und ein Matrixmaterial umfassen, werden im Rahmen dieser Erfindung als Hybridmaterialien bezeichnet. Dabei kann das Matrixmaterial aus einem kompakten Werkstoff oder ebenfalls aus einem Schaumstoff bestehen.

Als Matrixmaterial geeignete Polymere (MM) sind dem Fachmann an sich bekannt. Geeignet sind im Rahmen der vorliegenden Erfindung beispielsweise Ethylen-Vinylacetat-Copolymere, Bindemittel auf Epoxid-Basis oder auch Polyurethane. Erfindungsgemäß geeignet sind dabei Polyurethan Schaumstoffe oder auch kompakte Polyurethane wie beispielsweise thermoplastische Polyurethane.

Erfindungsgemäß wird das Polymer (MM) dabei so ausgewählt, dass eine ausreichende Haftung zwischen dem geschäumten Granulat und der Matrix gegeben ist um ein mechanisch stabiles Hybridmaterial zu erhalten.

Dabei kann die Matrix das geschäumte Granulat ganz oder teilweise umgeben. Erfindungsgemäß kann das Hybridmaterial weitere Komponenten enthalten, beispielsweise weitere Füllstoffe oder auch Granulate. Erfindungsgemäß kann das Hybridmaterial auch Mischungen verschiedener Polymere (MM) enthalten. Das Hybridmaterial kann auch Mischungen geschäumter Granulate enthalten.

Geschäumte Granulate, die neben dem geschäumten Granulat gemäß der vorliegenden Erfindung eingesetzt werden können, sind dem Fachmann an sich bekannt. Insbesondere geschäumte Granulate aus thermoplastischen Polyurethanen sind im Rahmen der vorliegenden Erfindung geeignet.

Gemäß einer Ausführungsform betrifft die vorliegende Erfindung demgemäß auch ein Hybridmaterial, enthaltend eine Matrix aus einem Polymer (MM), ein geschäumtes Granulat gemäß der vorliegenden Erfindung und ein weiteres geschäumtes Granulat aus einem thermoplastischen Polyurethan.

Die Matrix besteht im Rahmen der vorliegenden Erfindung aus einem Polymer (MM), Geeignet sind im Rahmen der vorliegenden Erfindung als Matrixmaterial beispielsweise Elastomere oder Schaumstoffe, insbesondere Schaumstoffe auf Basis von Polyurethanen, beispielsweise Elastomer wie Ethylen-Vinylacetat-Copolymere oder auch thermoplastische Polyurethane.

Demgemäß betrifft die vorliegende Erfindung auch ein Hybridmaterial wie zuvor beschrieben, wobei das Polymer (MM) ein Elastomer ist. Weiterhin betrifft die vorliegende Erfindung ein Hybridmaterial wie zuvor beschrieben, wobei das Polymer (MM) ausgewählt ist aus der Gruppe bestehend aus Ethylen-Vinylacetat-Copolymeren und thermoplastischen Polyurethanen.

Gemäß einer Ausführungsform betrifft die vorliegende Erfindung auch ein Hybridmaterial, enthaltend eine Matrix aus einem Ethylen-Vinylacetat-Copolymere und ein geschäumtes Granulat gemäß der vorliegenden Erfindung.

Gemäß einer weiteren Ausführungsform betrifft die vorliegende Erfindung ein Hybridmaterial, enthaltend eine Matrix aus einem Ethylen-Vinylacetat-Copolymere, ein geschäumtes Granulat gemäß der vorliegenden Erfindung und ein weiteres geschäumtes Granulat, beispielsweise aus einem thermoplastischen Polyurethan.

Gemäß einer Ausführungsform betrifft die vorliegende Erfindung ein Hybridmaterial, enthaltend eine Matrix aus einem thermoplastischen Polyurethan und ein geschäumtes Granulat gemäß der vorliegenden Erfindung.

Gemäß einer weiteren Ausführungsform betrifft die vorliegende Erfindung ein Hybridmaterial, enthaltend eine Matrix aus einem thermoplastischen Polyurethan, ein geschäumtes Granulat gemäß der vorliegenden Erfindung und ein weiteres geschäumtes Granulat, beispielsweise aus einem thermoplastischen Polyurethan.

Geeignete thermoplastische Polyurethane sind dem Fachmann an sich bekannt. Geeignete thermoplastische Polyurethane werden beispielsweise beschrieben in "Kunststoffhandbuch, Band 7, Polyurethane", Carl Hanser Verlag, 3. Auflage 1993, Kapitel 3.

Bevorzugt ist das Polymer (MM) im Rahmen der vorliegenden Erfindung ein Polyurethan. Polyurethan im Sinn der Erfindung umfasst alle bekannten elastischen Polyisocyanat-Polyadditionsprodukte. Diese umfassen insbesondere massive Polyisocyanat-Polyadditionsprodukte, wie viskoelastische Gele oder thermoplastische Polyurethane, und elastische Schaumstoffe auf Basis von Polyisocyanat-Polyadditionsprodukten, wie Weichschaumstoffe, Halbhartschaumstoffe oder Integralschaumstoffe. Weiter sind unter Polyurethanen im Sinn der Erfindung elastische Polymerblends, enthaltend Polyurethane und weitere Polymere, sowie Schaumstoffe aus diesen Polymerblends zu verstehen. Vorzugsweise handelt es sich bei der Matrix um ein gehärtetes, kompaktes Polyurethanbindemittel, einen elastischen Polyurethanschaumstoff oder ein viskoelastisches Gel.

Unter einem Polyurethanbindemittel wird dabei im Rahmen der vorliegenden Erfindung eine Mischung verstanden, die zu mindestens 50 Gew.-%, vorzugsweise zu mindestens 80 Gew.-% und insbesondere zu mindestens 95 Gew.-% aus einem Isocyanatgruppen aufweisenden Prepolymer, im Folgenden als Isocyanatprepolymer bezeichnet, besteht. Dabei liegt die Viskosität des erfindungsgemäßen Polyurethanbindemittels vorzugsweise in einem Bereich von 500 bis 4000 mPa.s, besonders bevorzugt von 1000 bis 3000 mPa.s, gemessen bei 25 °C nach DIN 53018.

Im Rahmen der Erfindung werden unter Polyurethan-Schaumstoffen Schaumstoffe gemäß DIN 7726 verstanden.

Die Dichte des Matrixmaterials liegt vorzugsweise im Bereich von 1 2 bis 0,01 g/cm³. Besonders bevorzugt ist das Matrixmaterial ein elastischer Schaumstoff oder ein IntegralSchaumstoff mit einer Dichte im Bereich von 0,8 bis 0,1 g/cm^{3,} insbesondere von 0,6 bis 0,3 g/cm³ oder kompaktes Material, beispielsweise ein gehärtetes Polyurethanbindemittel.

Insbesondere Schaumstoffe sind als Matrixmaterial geeignet. Hybridmaterialien, die ein Matrixmaterial aus einem Polyurethan Schaumstoff enthalten, weisen vorzugsweise eine gute Haftung zwischen Matrixmaterial und geschäumtem Granulat auf.

Gemäß einer Ausführungsform betrifft die vorliegende Erfindung auch ein Hybridmaterial, enthaltend eine Matrix aus einem Polyurethanschaum und ein geschäumtes Granulat gemäß der vorliegenden Erfindung.

Gemäß einer weiteren Ausführungsform betrifft die vorliegende Erfindung ein Hybridmaterial, enthaltend eine Matrix aus einem Polyurethanschaum, ein geschäumtes Granulat gemäß der vorliegenden Erfindung und ein weiteres geschäumtes Granulat, beispielsweise aus einem thermoplastischen Polyurethan.

Gemäß einer Ausführungsform betrifft die vorliegende Erfindung ein Hybridmaterial, enthaltend eine Matrix aus einem Polyurethan Integralschaum und ein geschäumtes Granulat gemäß der vorliegenden Erfindung.

Gemäß einer weiteren Ausführungsform betrifft die vorliegende Erfindung ein Hybridmaterial, enthaltend eine Matrix aus einem Polyurethan Integralschaum, ein geschäumtes Granulat gemäß der vorliegenden Erfindung und ein weiteres geschäumtes Granulat, beispielsweise aus einem thermoplastischen Polyurethan.

Ein erfindungsgemäßes Hybridmaterial, enthaltend ein Polymer (MM) als Matrix und ein erfindungsgemäßes geschäumtes Granulat kann beispielsweise hergestellt werden, indem die zur Herstellung des Polymers (MM) eingesetzten Komponenten und das geschäumte Granulat gegebenenfalls mit weiteren Komponenten vermischt und zum Hybridmaterial umsetzt werden, wobei die Umsetzung vorzugsweise unter Bedingungen erfolgt, unter denen das geschäumte Granulat im Wesentlichen stabil ist.

Geeignete Verfahren und Reaktionsbedingungen zur Herstellung des Polymers (MM), insbesondere eines Ethylen-Vinylacetat-Copolymers oder eines Polyurethans sind dem Fachmann an sich bekannt.

In einer bevorzugten Ausführungsform stellen die erfindungsgemäßen Hybridmaterialien Integralschaumstoffe, insbesondere Integralschaumstoffe auf Basis von Poyurethanen dar. Geeignete Verfahren zur Herstellung von Integralschaumstoffen sind dem Fachmann an sich bekannt. Die Integralschaumstoffe werden vorzugsweise nach dem one-shot-Verfahren mit Hilfe der Niederdruck oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff', Carl-Hanser-Verlag, München, Wien, 1975, oder im Kunststoff-Handbuch, Band 7, Polyurethane, 3. Auflage, 1993, Kapitel 7.

Sofern das erfindungsgemäße Hybridmaterial einen Integralschaumstoff umfasst, wird die Menge des in das Formwerkzeug eingebrachten Reaktionsgemisches so bemessen, dass die erhaltenen Formkörper aus Integralschaumstoffen eine Dichte von 0,08 bis 0,70 g/cm³, insbesondere von 0,12 bis 0,60 g/cm³ aufweisen. Die Verdichtungsgrade zur Herstellung der Formkörper mit verdichteter Randzone und zelligem Kern liegen im Bereich von 1 ,1 bis 8,5, vorzugsweise von 2, 1 bis 7,0.

Somit ist es möglich, Hybridmaterialien mit einer Matrix aus einem Polymer (MM) und darin enthaltenen dem erfindungsgemäßen geschäumten Granulat herzustellen, bei denen eine homogene Verteilung der geschäumten Partikel vorliegt. Das erfindungsgemäße geschäumte Granulat kann leicht in einem Verfahren zur Herstellung eines Hybridmaterials eingesetzt werden, da die einzelnen Partikel aufgrund ihrer geringen Größe rieselfähig sind und keine speziellen Anforderungen an die Verarbeitung stellen. Dabei können Techniken zur homogenen Verteilung des geschäumten Granulats wie langsame Rotation der Form, angewandt werden.

Der Reaktionsmischung zur Herstellung der erfindungsgemäßen Hybridmaterialien können gegebenenfalls auch noch Hilfsmittel und/oder Zusatzstoffe zugegeben werden. Genannt seien beispielsweise oberflächenaktive Substanzen, Schaumstabilisatoren, Zellregler, Trennmittel, Füllstoffe, Farbstoffe, Pigmente, Hydrolyseschutzmittel, geruchsabsorbierende Substanzen und fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzoloder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusölbzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylenund Fluoralkanresten als Seitengruppen.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatisehen Carbonsäure mit mindestens 10 C-Atomen mit mindestens difunktionellen Alkanolaminen, Polyolen und/oder Polyaminen mit Molekulargewichten von 60 bis 400, Gemischen aus organischen Aminen, Metallsalzen der Stearinsäure und organischen Monound/oder Dicarbonsäuren oder deren Anhydride oder Gemischen aus einer Iminoverbindung, dem Metallsalz einer Carbonsäure und gegebenenfalls einer Carbonsäure.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Bentonit, Serpentin, Hornblenden, Amphibole, Chrisotil, Talkum; Metalloxide, wie Kaolin, Aluminiumoxide, Titanoxide, Zinkoxid und Eisenoxide, Metallsalze wie Kreide, Schwerspat und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metallund insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden.

In einem erfindungsgemäßen Hybridmaterial beträgt der Volumenanteil des geschäumten Granulats vorzugsweise 20 Volumenprozent und mehr, besonders bevorzugt 50 Volumenprozent und mehr bevorzugt 80 Volumenprozent und mehr und insbesondere 90 Volumenprozent und mehr, jeweils bezogen auf das Volumen des erfindungsgemäßen Hybridsystems.

Die erfindungsgemäßen Hybridmaterialien, insbesondere Hybridmaterialien mit einer Matrix aus zelligem Polyurethan, zeichnen sich durch eine sehr gute Haftung des Matrixmaterials mit dem erfindungsgemäßen geschäumten Granulat aus. Dabei reißt ein erfindungsgemäßes Hybridmaterial vorzugsweise nicht an der Grenzfläche von Matrixmaterial und geschäumtem Granulat. Dadurch ist es möglich, Hybridmaterialien herzustellen, die gegenüber konventionellen Polymermaterialien, insbesondere konventionellen Polyurethanmaterialien bei gleicher Dichte verbesserte mechanische Eigenschaften, wie Weiterreißfestigkeit und Elastizität haben.

Die Elastizität erfindungsgemäßer Hybridmaterialien in Form von Integralschaumstoffen ist vorzugsweise grösser 40 % und besonders bevorzugt grösser 50 % nach DIN 53512.

Weiter zeigen die erfindungsgemäßen Hybridmaterialien, insbesondere solche auf Basis von Integral-Schaumstoffen hohe Rückprallelastizitäten bei geringer Dichte. Insbesondere Integralschaumstoffe auf Basis erfindungsgemäßer Hybridmaterialien eignen sich daher hervorragend als Materialien für Schuhsohlen. Dadurch werden leichte und komfortable Sohlen mit guten Haltbarkeitseigenschaften erhalten. Solche Materialien sind insbesondere als Zwischensohlen für Sportschuhe geeignet.

Die erfindungsgemäßen Hybridmaterialien mit einer zelligen Matrix sind beispielsweise geeignet für Polsterungen, beispielsweise von Möbeln, und Matratzen.

Hybridmaterialien mit einer Matrix aus einem viskoelastischen Gel zeichnen sich speziell durch eine erhöhte Viskoelastizität und verbesserte elastische Eigenschaften aus. Diese Materialien eignen sich somit ebenfalls als Polsterungsmaterialien, beispielsweise für Sitze, speziell Sattel wie Fahrradsattel oder Motorradsattel.

Hybridmaterialien mit einer kompakten Matrix sind beispielsweise als Bodenbeläge, insbesondere als Belag für Spielplätze, Leichtathletiklaufbahnen, Sportfelder und Sporthallen, geeignet.

Die Eigenschaften der erfindungsgemäßen Hybridmaterialien können abhängig vom eingesetzten Polymer (MM) in weiten Bereichen variieren und lassen sich insbesondere durch eine Variation von Größe, Gestalt und Beschaffenheit des expandierten Granulats, oder auch die Zugabe weiterer Zusatzstoffe, beispielsweise auch weiterer nicht geschäumter Granulate wie Kunststoffgranulate, beispielsweise Gummigranulat, in weiten Grenzen variiert werden.

Die erfindungsgemäßen Hybridmaterialien weisen eine hohe Haltbarkeit und Belastbarkeit auf, die sich insbesondere durch eine hohe Zugfestigkeit und Bruchdehnung bemerkbar macht. Darüber hinaus weisen erfindungsgemäße Hybridmaterialien eine geringe Dichte auf.

Weitere Ausführungsformen der vorliegenden Erfindung sind den Ansprüchen und den Beispielen zu entnehmen.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Herstellung von PCL500-PTHF1000-PCL500

Das Triblock PCL500-PCL1000-PCL500 wurde durch Ringöffnungspolymerisation von 100 Gewichtsprozent an Caprolactone bezogen auf ein vorgelegtes hydroxy-terminiertes Polytetramethylenoxid mit einem zahlenmittleren Molekulargewicht Mn von 1000 g/mol in Gegenwart von 10 ppm Titanetrabutanolat (TTB) bei 180 °C erhalten.

### 2. Vergleichsbeispiel 1: TPC Herstellung via DMT und PTHF2000

Dimethylterephthalat (100 mol%) wurde in Gegenwart eines dreifachen Überschusses an 1,4-Butandiol (300 mol%) und hydroxy-terminiertem Polytetramethylenoxid mit einem zahlenmittleren Molekulargewicht Mn von 2000 g/mol (16,1 mol%) in einem Stahlreaktor in Gegenwart von Tetrabutylorthotitanat als Katalysator und 0.5% Irganox 1010 bei 165 °C, Normaldruck und Stickstoffatmosphäre für 90 Minuten reagiert, während Methanol abdestilliert wurde. Nachfolgend wurde die Reaktionstemperatur langsam auf 210 °C erhöht. Nach ca. 1 h wurde die Reaktionstemperatur auf 250 °C erhöht und der Überschuss an 1,4-Butandiol bei verminderten Druck (~20 Pa) abdestilliert.

Die Synthese wurde abgebrochen, sobald eine Schmelzflussrate (MFR) von 5 cm³/10min bei 190 °C / 2,16 kg erreicht wurde. Durch Extrusion des Produktes wurde Linsengranulat erhalten.

### 3. Beispiel 1: TPC Herstellung via DMT und PTHF2000/PCL500-PTHF1000-PCL500 (1:2)

Dimethylterephthalat (100 mol%) wurde in Gegenwart eines dreifachen Überschusses an 1,4-Butandiol (300 mol%), hydroxy-terminiertem Polytetramethylenoxid mit einem zahlenmittleren Molekulargewicht Mn von 2000 g/mol (5,4 mol%) und einem hydroxy-terminiertem PCL500-PTHF1000-PCL500 mit einem zahlenmittleren Molekulargewicht Mn von 2000 g/mol (10,7 mol%) in einem Stahlreaktor in Gegenwart von Tetrabutylorthotitanat als Katalysator und 0.5% Irganox 1010 bei 165 °C, Normaldruck und Stickstoffatmosphäre für 90 Minuten reagiert, während Methanol abdestilliert wurde. Nachfolgend wurde die Reaktionstemperatur langsam auf 210 °C erhöht. Nach ca. 1 h wurde die Reaktionstemperatur auf 250 °C erhöht und der Überschuss an 1,4-Butandiol bei verminderten Druck (~20 Pa) abdestilliert.

Die Synthese wurde abgebrochen, sobald eine Schmelzflussrate (MFR) von 5 cm3/10min bei 190 °C / 2,16 kg erreicht wurde. Durch Extrusion des Produktes wurde Linsengranulat erhalten.

### 4. Vergleichsbeispiel 2: TPC Herstellung via Terephthalsäure und PTHF2000

Terephthalsäure (100 mol%) wurde in Gegenwart eines Überschusses an 1,4-Butandiol (250 mol%) und hydroxy-terminiertem Polytetramethylenoxid mit einem zahlenmittleren Molekulargewicht Mn von 2000 g/mol (16,1 mol%) in einem Stahlreaktor in Gegenwart von Tetrabutylorthotitanat als Katalysator und 0.5% Irganox 1010 bei 165 °C, Normaldruck und Stickstoffatmosphäre für 90 Minuten reagiert, während Methanol abdestilliert wurde. Nachfolgend wurde die Reaktionstemperatur langsam auf 210 °C erhöht. Nach ca. 1 h wurde die Reaktionstemperatur auf 250 °C erhöht und der Überschuss an 1,4-Butandiol bei verminderten Druck (~20 Pa) abdestilliert.

Die Synthese wurde abgebrochen, sobald eine Schmelzflussrate (MFR) von 5 cm3/10min bei 190 °C / 2,16 kg erreicht wurde. Durch Extrusion des Produktes wurde Linsengranulat erhalten.

### 5. Beispiel 2: TPC Herstellung via Terephthalsäure & PTHF2000/PCL500-PTHF1000-PCL500 (1:2)

Terephthalsäure (100 mol%) wurde in Gegenwart eines Überschusses an 1,4-Butandiol (250 mol%), hydroxy-terminiertem Polytetramethylenoxid mit einem zahlenmittleren Molekulargewicht Mn von 2000 g/mol (5,4 mol%) und einem hydroxy-terminiertem PCL500-PTHF1000-PCL500 mit einem zahlenmittleren Molekulargewicht Mn von 2000 g/mol (10,7 mol%) in einem Stahlreaktor in Gegenwart von Tetrabutylorthotitanat als Katalysator und 0.5% Irganox 1010 bei 165 °C, Normaldruck und Stickstoffatmosphäre für 90 Minuten reagiert, während Methanol abdestilliert wurde. Nachfolgend wurde die Reaktionstemperatur langsam auf 210 °C erhöht. Nach ca. 1 h wurde die Reaktionstemperatur auf 250 °C erhöht und der Überschuss an 1,4-Butandiol bei verminderten Druck (~20 Pa) abdestilliert.

Die Synthese wurde abgebrochen, sobald eine Schmelzflussrate (MFR) von 5 cm3/10min bei 190 °C / 2,16 kg erreicht wurde. Durch Extrusion des Produktes wurde Linsengranulat erhalten.

### 6. Vergleichsbeispiel 3: TPA Herstellung via PA6 und PTHF2000

In einem Stahlreaktor wurden ε-Caprolactam (100 mol%), Terephthalsäure 6,3 mol%), und deionisiertes Wasser (27,8 mol%) bei 260 °C und 3 bar Druck für 2 h gerührt. Anschließend wurde der Druck langsam auf 5000 Pa gesenkt und für 2 h weiter gerührt.

Nach weiteren 2 h wurden zu dem Reaktionsgemisch hydroxy-terminiertem Polytetramethylenoxid mit einem zahlenmittleren Molekular¬gewicht Mn von 2000 g/mol (3,15 mol%), 1,3-Propandiol (4,8 mol%) und Tetraisopropylorthotitanat als Katalysator zugegeben und für 1 h bei 240 °C und 2 bar Druck gerührt. Nachfolgend wurde überschüssiges 1,3-Propandiol durch Senken des Drucks auf ~20 Pa und Anhebung der Temperatur auf 250 °C über einen Zeitraum von 1 h abdestilliert.

### 7. Beispiel3: TPA Herstellung via PA6 & PTHF2000/PCL500-PTHF1000-PCL500

In einem Stahlreaktor wurden ε-Caprolactam (100 mol%), Terephthalsäure 6,3 mol%), und deionisiertes Wasser (27,8 mol%) bei 260 °C und 3 bar Druck für 2 h gerührt. Anschließend wurde der Druck langsam auf 5000 Pa gesenkt und für 2 h weiter gerührt.

Nach weiteren 2 h wurden zu dem Reaktionsgemisch hydroxy-terminiertes Polytetramethylenoxid mit einem zahlenmittleren Molekulargewicht Mn von 2000 g/mol (1,1 mol%), hydroxy-terminiertes PCL500-PTHF1000-PCL500 mit einem zahlenmittleren Molekulargewicht Mn von 2000 g/mol (2,05 mol%), 1,3-Propandiol (4,8 mol%) und Tetraisopropylorthotitanat als Katalysator zugegeben und für 1 h bei 240 °C und 2 bar Druck gerührt. Nachfolgend wurde überschüssiges 1,3-Propandiol durch Senken des Drucks auf ~20 Pa und Anhebung der Temperatur auf 250 °C über einen Zeitraum von 1 h abdestilliert.

### 8. Vergleichsbeispiel 4: TPA Herstellung via PA12 mit PTHF2000

In einem Stahlreaktor wurden Laurinlactam (100 mol%) und Decandicarbonsäure (26 mol%) 2 h unter Stickstoff auf 280 °C erhitzt. Anschließend wurden hydroxy-terminiertes Polytetramethylenoxid mit einem zahlenmittleren Molekulargewicht Mn von 2000 g/mol (26,5 mol%) zugegeben. Nach 1 h Rühren bei 280 °C wurde die Temperatur auf 270 °C gesenkt, weitere 5 Stunden unter Stickstoff-Atmosphäre und weitere 8 h unter Vakuum von 90 mbar gerührt.

Die Synthese wurde abgebrochen, sobald eine Schmelzflussrate (MFR) von 12 g/10min bei 235 °C / 1,00 kg erreicht wurde. Durch Extrusion des Produktes wurde Linsengranulat erhalten .

### 9. Beispiel 4: TPA Herstellung via PA12 & PTHF2000/PCL500-PTHF1000-PCL500

In einem Stahlreaktor wurden Laurinlactam (100 mol%) und Decandicarbonsäure (26 mol%) 2 h unter Stickstoff auf 280 °C erhitzt. Anschließend wurden hydroxy-terminiertes Polytetramethylenoxid mit einem zahlenmittleren Molekulargewicht Mn von 2000 g/mol (8,83 ol%) und ein hydroxy-terminiertes PCL500-PTHF1000-PCL500 mit einem zahlenmittleren Molekulargewicht Mn von 2000 g/mol (17,7 mol%,) zugegeben. Nach 1 h Rühren bei 280 °C wurde die Temperatur auf 270 °C gesenkt, weitere 5 Stunden unter Stickstoff-Atmosphäre und weitere 8 h unter Vakuum von 90 mbar gerührt.

Die Synthese wurde abgebrochen, sobald eine Schmelzflussrate (MFR) von 12 g/10min bei 235 °C / 1,00 kg erreicht wurde. Durch Extrusion des Produktes wurde Linsengranulat erhalten.

### 10. DSC Analyse

Mittels Spritzguss wurden Spritzgussplatten mit einer Dicke von 2 mm hergestellt, die anschließend für 20 h bei 100 °C getempert wurden. Nachdem die Probe 10 Min bei 100 °C getrocknet wurde, wurde nachfolgend der 1. Heizlauf einer DSC-Messung mit einer Heizrate von 20 °C/min von -60 bis 240 °C gemessen.

| TPE | Maximum eines endothermen Peaks im Bereich -20 °C bis +20 °C |
|---|---|
| Vergleichsbeispiel 1 | Ja |
| Beispiel 1 | Nein |
| Vergleichsbeispiel 2 | Ja |
| Beispiel 2 | Nein |
| Vergleichsbeispiel 3 | Ja |
| Beispiel 3 | Nein |
| Vergleichsbeispiel 4 | Ja |
| Beispiel 4 | Nein |

### 11. Herstellung eines Partikelschaums aus Beispiel 1

Zur Herstellung der expandierten Partikel aus dem in Beispiel 1 hergestellten TPC wurde ein Doppelschneckenextruder mit einem Schneckendurchmesser von 18 mm und einem Verhältnis von Länge zu Durchmesser von 40 mit anschließender Schmelzepumpe, einem Anfahrventil mit Siebwechsler, einer Lochplatte und einer Unterwassergranulierung verwendet. Das in Beispiel 1 hergestellte TPC wurde vor der Verwendung bei 80 °C für 3 h getrocknet um eine Restfeuchte von kleiner 0,02 Gew.% zu erhalten.

Das TPC wurde mit 0,1 Gew.% Talkum (Microtalk IT Extra, Mondo Minerals) bezogen auf das TPC gemischt und anschließend mittels einer gravimetrischen Dosierung in den Doppelschneckenextruder dosiert.

Nach dem Dosieren der Materialien in den Einzug des Doppelschneckenextruders wurden das aufgeschmolzene TPC mit dem Talkum in dem Doppelschneckenextruder vermischt. Nach dem Vermischen wurde eine Mischung aus CO2 und N2 als Treibmittel zugegeben. Beim Durchlaufen der restlichen Extruderstrecke wurden das Treibmittel und die Polymerschmelze miteinander vermischt, so dass sich eine homogene Mischung bildete. Der Gesamtdurchsatz des Extruders, welcher das TPC, das Talkum und die Treibmittel beinhaltet, betrug 1,75 kg/h.

Das Schmelzgemisch wurde anschließend mittels einer Zahnradpumpe (ZRP) über ein Anfahrventil mit Siebwechsler (AV) in eine Lochplatte (LP) gedrückt und in der Schneidkammer der Unterwassergranulierung (UWG) zu Granulaten geschnitten und mit dem temperierten und unter Druck stehenden Wasser abtransportiert und dabei expandiert. Die Trennung der expandierten Partikel von dem Prozesswasser wird mittels eines Zentrifugaltrockners gewährleistet.

Die verwendeten Temperaturen der Anlagenteile sind in Tabelle 2 aufgelistet. Tabelle 3 zeigt die verwendeten Mengen an Treibmittel (CO2 und N2). Die Mengenangaben der Treibmittel beziehen sich auf den Gesamtdurchsatz an Polymer.

**Tabelle 2: Temperaturdaten der Anlagenteile**

| | Temperatur -bereich im Extruder (° C) | Temperatur bereich der ZRP (°C) | Temperatur bereich des AV (°C) | Temperatur bereich der LP (°C) | Wasserdruc k in der UWG (bar) | Wassertem peratur in der UWG (°C) |
|---|---|---|---|---|---|---|
| V1 | 215 - 190 | 190 | 200 | 200 | 15 | 40 |
| V2 | 195 - 170 | 190 | 200 | 200 | 15 | 40 |
| V3 | 195 - 170 | 190 | 200 | 200 | 15 | 40 |
| V4 | 195 - 170 | 190 | 200 | 200 | 15 | 40 |
| V5 | 195 - 170 | 190 | 200 | 200 | 15 | 40 |
| V6 | 195 - 170 | 190 | 200 | 200 | 12,5 | 40 |
| V7 | 195 - 170 | 190 | 200 | 200 | 10 | 40 |
| V8 | 195 - 170 | 190 | 200 | 200 | 15 | 45 |
| V9 | 215 - 190 | 190 | 200 | 200 | 15 | 45 |
| V10 | 215 - 190 | 190 | 200 | 200 | 15 | 45 |

**Tabelle 3: Dosierte Mengen der Treibmittel bezogen auf den Gesamtdurchsatz an das TPC aus Beispiel 1**

| | CO₂ [Gew.%] | N₂ [Gew.%] |
|---|---|---|
| V1 | 1,75 | 0,3 |
| V2 | 1,75 | 0,3 |
| V3 | 2 | 0,3 |
| V4 | 2,25 | 0,3 |
| V5 | 2,5 | 0,3 |
| V6 | 2,5 | 0,3 |
| V7 | 2,5 | 0,3 |
| V8 | 2,5 | 0,3 |
| V9 | 2,5 | 0,3 |
| V10 | 2,5 | 0,45 |

Die für die einzelnen Versuchen resultierenden Schüttdichten der expandierten Granulate sind in Tabelle 4 aufgelistet.

**Tabelle 4: Gemessene Schüttdichte der expandierten Partikel nach einer Lagerzeit von mindestens 3h**

| | Schüttdichte (g/l) |
|---|---|
| V1 | 134 |
| V2 | 118 |
| V3 | 133 |
| V4 | 159 |
| V5 | 166 |
| V6 | 172 |
| V7 | 182 |
| V8 | 190 |
| V9 | 192 |
| V10 | 165 |

Neben der Verarbeitung im Extruder wurden auch expandierte Partikel im Imprägnierkessel hergestellt. Hierzu wurde der Kessel mit einem Füllgrad von 80 % mit der Fest/Flüssigphase gefüllt wobei das Phasenverhältnis 0,32 betrug.

Als Festphase ist hier das TPC aus Beispiel 1 und als Flüssigphase das Gemisch aus Wasser mit Calciumcarbonat und einer oberflächenaktiven Substanz zu sehen. Auf dieses Gemisch wurde in den gasdichten Kessel welcher vorher mit Stickstoff gespült wurde das Treibmittel (Butan) mit der in Tabelle 5 angegebenen Menge bezogen auf die Festphase (TPC aus Beispiel 1) aufgepresst. Der Kessel wurde unter Rühren der Fest/Flüssigphase erhitzt und bei einer Temperatur von 50 °C definiert Stickstoff bis zu einem Druck von 8 bar aufgepresst. Anschließend wurde bis zur gewünschten Imprägniertemperatur (IMT) weiter geheizt. Bei Erreichen der Imprägniertemperatur und des Imprägnierdruckes wurde nach einer gegebenen Haltezeit der Kessel über ein Ventil entspannt. Die genauen Herstellparameter der Versuche sowie die erzielten Schüttdichten sind in Tabelle 5 aufgelistet.

**Tabelle 5: Herstellparameter und erzielte Schüttdichte des imprägnierten TPC aus Beispiel 1**

| Bezeichnung | Treibmittelkonzentration bezogen auf die Menge Festphase (Gew. %) | Haltezeit (Bereich IMT - 5°C bis IMT + 2°C) (min) | IMT (°C) | Schüttdichte (g/l) |
|---|---|---|---|---|
| V11 | 24 | 15 | 129,5 | 185 |
| V12 | 24 | 8 | 130 | 168 |
| V13 | 24 | 10 | 132 | 113 |
| V14 | 24 | 14 | 134 | 104 |

### 12. Herstellung eines Partikelschaums aus Beispiel 4

Zur Herstellung der expandierten Partikel aus dem in Beispiel 4 hergestellten TPA wurde ein Doppelschneckenextruder mit einem Schneckendurchmesser von 18 mm und einem Verhältnis von Länge zu Durchmesser von 40 mit anschließender Schmelzepumpe, einem Anfahrventil mit Siebwechsler, einer Lochplatte und einer Unterwassergranulierung verwendet. Das in Beispiel 4 hergestellte TPA wurde vor der Verwendung bei 80 °C für 3 h getrocknet um eine Restfeuchte von kleiner 0,02 Gew.% zu erhalten.

Das TPA wurde mit 0,1 Gew.% Talkum (Microtalk IT Extra, Mondo Minerals) bezogen auf das TPA gemischt und anschließend mittels einer gravimetrischen Dosierung in den Doppelschneckenextruder dosiert.

Nach dem Dosieren der Materialien in den Einzug des Doppelschneckenextruders wurden das aufgeschmolzene TPA mit dem Talkum in dem Doppelschneckenextruder vermischt. Nach dem Vermischen wurde eine Mischung aus CO2 und N2 als Treibmittel zugegeben. Beim Durchlaufen der restlichen Extruderstrecke wurden das Treibmittel und die Polymerschmelze miteinander vermischt, so dass sich eine homogene Mischung bildete. Der Gesamtdurchsatz des Extruders, welcher das TPA, das Talkum und die Treibmittel beinhaltet, betrug 1,75 kg/h.

Das Schmelzgemisch wurde anschließend mittels einer Zahnradpumpe (ZRP) über ein Anfahrventil mit Siebwechsler (AV) in eine Lochplatte (LP) gedrückt und in der Schneidkammer der Unterwassergranulierung (UWG) zu Granulaten geschnitten und mit dem temperierten und unter Druck stehenden Wasser abtransportiert und dabei expandiert. Die Trennung der expandierten Partikel von dem Prozesswasser wird mittels eines Zentrifugaltrockners gewährleistet.

Die verwendeten Temperaturen der Anlagenteile sind in Tabelle 6 aufgelistet. Tabelle 7 zeigt die verwendeten Mengen an Treibmittel (CO2 und N2). Die Mengenangaben der Treibmittel beziehen sich auf den Gesamtdurchsatz an Polymer.

**Tabelle 6: Temperaturdaten der Anlagenteile**

| | Temperatur -bereich im Extruder (° C) | Temperatur bereich der ZRP (°C) | Temperatur bereich des AV (°C) | Temperatur bereich der LP (°C) | Wasserdruc k in der UWG (bar) | Wassertem peratur in der UWG (°C) |
|---|---|---|---|---|---|---|
| V15 | 215 - 190 | 190 | 200 | 200 | 15 | 40 |
| V16 | 195 - 170 | 190 | 200 | 200 | 15 | 40 |

**Tabelle 7: Dosierte Mengen der Treibmittel bezogen auf den Gesamtdurchsatz an das TPA aus Beispiel 4**

| | CO₂ [Gew.%] | N₂ [Gew.%] |
|---|---|---|
| V15 | 1,75 | 0,3 |
| V16 | 1,75 | 0,3 |

Die für die einzelnen Versuchen resultierenden Schüttdichten der expandierten Granulate sind in Tabelle 8 aufgelistet.

**Tabelle 8: Gemessene Schüttdichte der expandierten Partikel nach einer Lagerzeit von mindestens 3h**

| | Schüttdichte (g/l) |
|---|---|
| V15 | 134 |
| V16 | 118 |

Neben der Verarbeitung im Extruder wurden auch expandierte Partikel im Imprägnierkessel hergestellt. Hierzu wurde der Kessel mit einem Füllgrad von 80 % mit der Fest/Flüssigphase gefüllt wobei das Phasenverhältnis 0,32 betrug.

Als Festphase ist hier das TPA aus Beispiel 4 und als Flüssigphase das Gemisch aus Wasser mit Calciumcarbonat und einer oberflächenaktiven Substanz zu sehen. Auf dieses Gemisch wurde in den gasdichten Kessel welcher vorher mit Stickstoff gespült wurde das Treibmittel (Butan) mit der in Tabelle 9 angegebenen Menge bezogen auf die Festphase (TPA aus Beispiel 4) aufgepresst. Der Kessel wurde unter Rühren der Fest/Flüssigphase erhitzt und bei einer Temperatur von 50 °C definiert Stickstoff bis zu einem Druck von 8 bar aufgepresst. Anschließend wurde bis zur gewünschten Imprägniertemperatur (IMT) weiter geheizt. Bei Erreichen der Imprägniertemperatur und des Imprägnierdruckes wurde nach einer gegebenen Haltezeit der Kessel über ein Ventil entspannt. Die genauen Herstellparameter der Versuche sowie die erzielten Schüttdichten sind in Tabelle 9 aufgelistet.

**Tabelle 9: Herstellparameter und erzielte Schüttdichte des imprägnierten TPA aus Beispiel 4**

| Bezeichnung | Treibmittelkonzentration bezogen auf die Menge Festphase (Gew. %) | Haltezeit (Bereich IMT - 5°C bis IMT + 2°C) (min) | IMT (°C) | Schüttdichte (g/l) |
|---|---|---|---|---|
| V17 | 24 | 11 | 102,5 | 192 |
| V18 | 24 | 15 | 103,5 | 151 |
| V19 | 24 | 22 | 105 | 113 |
| V20 | 24 | 12 | 107 | 89 |
| V21 | 24 | 17 | 109 | 87 |

### Zitierte Literatur:

Jiri George Drobny, Handbook of Thermoplastic Elastomers, PDL Handbook Series, Elsevier, 2007, Geoffrey Holden,
Hans R. Kricheldorf, Roderic P. Quirk, Thermoplastic Elastomers, Hanser Verlag, 2004, Chunwang Yi, Zhihan Peng, Huaping Wang, Min Li, Chaosheng Wang, Synthesis and characteristics of thermoplastic elastomer based on polyamide-6, 2011, 60, 12, 1728-1736
DE2936976
DE2936977
DE3818209A1
US2011213076
US8481652
US4355155A
US3766146A
US3891604A
US6274696B1
US7973124B2
EP0659825A2
US9150724B2
WO2001004174A1
US3663653A
EP2325249A1
US5955565A
"Kunststoffhandbuch, Band 7, Polyurethane", Carl Hanser Verlag, 3. Auflage 1993, Kapitel 3.1 WO 2007/082838 A1
WO2013/153190 A1
WO 2015/052265 A1
WO 2015/055811 A1
"Kunststoffhandbuch, Band 7, Polyurethane", Carl Hanser Verlag, 3. Auflage 1993, Kapitel 3 Piechota und Röhr in "Integralschaumstoff, Carl-Hanser-Verlag, München, Wien, 1975, Kunststoff-Handbuch, Band 7, Polyurethane, 3. Auflage, 1993, Kapitel 7

## Patentansprüche

1. Blockcopolymer mindestens enthaltend
(i) einen Block (P1), der erhalten oder erhältlich ist durch Umsetzung
(a) eines Triblockcopolymers mit der Struktur A-B-A', wobei Block B ausgewählt ist aus Polyethern oder Polyestern und die Blöcke A und A' gleich oder verschieden sind, und
(b) mindestens eines Polymers (PM) ausgewählt aus der Gruppe bestehend aus Polyestern und Polyethern,
(ii) und einen Block (P2) der ausgewählt ist aus der Gruppe bestehend aus Polyamiden und Polyestern.

2. Blockcopolymer gemäß Anspruch 1, wobei der Block B und das Polymer (PM) ausgewählt sind aus der Gruppe bestehend aus Polyethern.

3. Blockcopolymer gemäß einem der Ansprüche 1 oder 2, wobei das Triblockcopolymer in einer Menge im Bereich von 20 bis 80 Gew.-% bezogen auf die Summe der Menge des Triblockcopolymers und des Polymers (PM) eingesetzt wird.

4. Blockcopolymer gemäß einem der Ansprüche 1 bis 3, wobei der Block B ausgewählt ist aus Polyethern und das Polymer (PM) ausgewählt ist aus Polyethern.

5. Blockcopolymer gemäß einem der Ansprüche 1 bis 4, wobei der Block B ausgewählt ist aus Polytetramethylenoxiden und Polytrimethylenoxiden.

6. Blockcopolymer gemäß Anspruch 5, wobei das zahlenmittlere Molekulargewicht Mn des Polytetramethylenoxids im Bereich von 500 bis 3500 g/mol liegt.

7. Blockcopolymer gemäß einem der Ansprüche 1 bis 3, wobei der Block B ausgewählt ist aus Polyestern und das das Polymer (PM) ausgewählt ist aus Polyestern.

8. Blockcopolymer gemäß einem der Ansprüche 1 bis 7, wobei der Block A oder der Block A' oder der Block A und der Block A' ausgewählt sind aus Polycaprolactonen.

9. Blockcopolymer gemäß einem der Ansprüche 1 bis 7, wobei das Triblockcopolymer ein Poly-ε-caprolactonpolyol ist, das erhältlich ist oder erhalten wird durch Umsetzung von ε-Caprolacton und einem Startermolekül, das ausgewählt ist aus der Gruppe bestehend aus α-Hydro-ω-hydroxypoly(oxytetramethylen)-diolen.

10. Blockcopolymer gemäß einem der Ansprüche 1 bis 9, wobei das zahlenmittlere Molekulargewicht Mn des Polymers (PM) im Bereich von 500 bis 3500 g/mol liegt.

11. Blockcopolymer gemäß einem der Ansprüche 1 bis 10, wobei das zahlenmittlere Molekulargewicht des Polymers (PM) im Bereich von 80 bis 120% des zahlenmittleren Molekulargewichts des Triblockcopolymers ABA` liegt.

12. Blockcopolymer gemäß einem der Ansprüche 1 bis 11, wobei der Block (P2) ein Polyamid-Block ist erhalten oder erhältlich durch Umsetzung einer ausgewählt aus der Gruppe bestehend aus aliphatischen, teilaromatischen und aromatischen Polyamiden.

13. Blockcopolymer gemäß einem der Ansprüche 1 bis 11, wobei der Block (P2) ein Polyester-Block ist erhalten oder erhältlich durch Umsetzung einer ausgewählt aus der Gruppe bestehend aus Polybutylenterephthalaten und Polyethylenterephthalaten.

14. Verfahren zur Herstellung eines Blockcopolymers mindestens enthaltend einen Block (P1), der erhalten oder erhältlich ist durch Umsetzung eines Triblockcopolymers mit der Struktur A-B-A', wobei Block B ausgewählt ist aus Polyethern oder Polyestern und die Blöcke A und A' gleich oder verschieden sind und mindestens eines Polymers (PM) ausgewählt aus der Gruppe bestehend aus Polyestern und Polyethern, und einen Block (P2) der ausgewählt ist aus der Gruppe bestehend aus Polyamiden und Polyestern, umfassend die Umsetzung einer Zusammensetzung enthaltend ein Triblockcopolymer AB-A' und ein Polymer (PM) ausgewählt aus der Gruppe bestehend aus Polyestern und Polyethern.

15. Formkörper, umfassend ein Blockcopolymer gemäß einem der Ansprüche 1 bis 13 oder ein Blockcopolymer erhalten oder erhältlich nach einem Verfahren gemäß Anspruch 14.

16. Geschäumtes Granulat umfassend ein Blockcopolymer gemäß einem er Ansprüche 1 bis 13 oder ein Blockcopolymer erhalten oder erhältlich nach einem Verfahren gemäß Anspruch 14.

17. Geschäumtes Granulat gemäß Anspruch 16, wobei der mittlere Durchmesser der Partikel im Bereich von 0,5 bis 20 mm liegt.

18. Formkörper aus einem geschäumten Granulat gemäß einem der Ansprüche 16 oder 17.

19. Verwendung eines Blockcopolymers gemäß einem der Ansprüche 1 bis 13 zur Herstellung eines Formkörpers.

20. Verwendung gemäß Anspruch 19, wobei der Formkörper zumindest teilweise in Form eines Schaums oder Partikelschaums vorliegt.

21. Verwendung gemäß Anspruch 19 oder 20, wobei der Formkörper ein Teil einer Schuhsohle, eine Matratze, Sitzpolster, Unterlage, Griff, Schutzfolie, ein Bauteil im Automobilinnen- und -außenbereich, eine Gymnastikmatte, ein Körperprotektor, ein Auskleidungselement im Automobilbau, ein Schalldämpfer, ein Schwingungsdämpfer, eine Polsterung, ein Fahrradsattel, ein Spielzeug, ein Reifen oder ein Reifenteil oder ein Belag für eine Leichtathletiklaufbahn, eine Sporthalle oder einen Gehweg, eine dämpfende Schicht oder ein dämpfender Kern in einem Sandwichelement oder eine Verpackung ist.

22. Verwendung gemäß Anspruch 19 oder 20, wobei der Formkörper ein Spritzguss-, Extrusions- und Pressartikel, ein Schlauch, ein Kabel oder Teil eines Kabels, ein Aufzugsoder Antriebsriemen, ein Förderband, ein Schlauch, Teil eines Schuhs, eine Folie, ein Vlies, Fasern, ein Skischuh oder Teil eines Skischuhs, eine Skifolien, ein Stecker, ein Dämpfungselement, Gehäuse, ein Formteil für Elektroindustrie, Automobilindustrie, Maschinenbau, 3D-Druck, Medizin und Konsumartikel und Sportartikeln ist.

## Claims

1. A block copolymer at least comprising
(i) a block (P1) obtained or obtainable by reacting
(a) a triblock copolymer having the structure A-B-A', where block B is selected from polyethers or polyesters and blocks A and A' are identical or different, and
(b) at least one polymer (PM) selected from the group consisting of polyesters and polyethers,
(ii) and a block (P2) selected from the group consisting of polyamides and polyesters.

2. The block copolymer according to claim 1, wherein block B and the polymer (PM) are selected from the group consisting of polyethers.

3. The block copolymer according to either of claims 1 and 2, wherein the triblock copolymer is used in an amount within a range from 20% to 80% by weight based on the sum of the amount of triblock copolymer and of polymer (PM).

4. The block copolymer according to any of claims 1 to 3, wherein block B is selected from polyethers and the polymer (PM) is selected from polyethers.

5. The block copolymer according to any of claims 1 to 4, wherein block B is selected from polytetramethylene oxides and polytrimethylene oxides.

6. The block copolymer according to claim 5, wherein the number-average molecular weight Mn of the polytetramethylene oxide is within a range from 500 to 3500 g/mol.

7. The block copolymer according to any of claims 1 to 3, wherein block B is selected from polyesters and the polymer (PM) is selected from polyesters.

8. The block copolymer according to any of claims 1 to 7, wherein block A, or block A', or block A and block A' are selected from polycaprolactones.

9. The block copolymer according to any of claims 1 to 7, wherein the triblock copolymer is a poly-ε-caprolactone polyol obtainable or obtained by reaction of ε-caprolactone and a starter molecule selected from the group consisting of α-hydro-ω-hydroxypoly(oxytetramethylene)diols.

10. The block copolymer according to any of claims 1 to 9, wherein the number-average molecular weight Mn of the polymer (PM) is within a range from 500 to 3500 g/mol.

11. The block copolymer according to any of claims 1 to 10, wherein the number-average molecular weight of the polymer (PM) is within a range from 80% to 120% of the number-average molecular weight of the triblock copolymer ABA' .

12. The block copolymer according to any of claims 1 to 11, wherein block (P2) is a polyamide block obtained or obtainable by reaction of a polyamide selected from the group consisting of aliphatic, semiaromatic, and aromatic polyamides.

13. The block copolymer according to any of claims 1 to 11, wherein block (P2) is a polyester block obtained or obtainable by reaction of a polyester selected from the group consisting of polybutylene terephthalates and polyethylene terephthalates.

14. A process for producing a block copolymer at least comprising a block (P1) obtained or obtainable by reaction of a triblock copolymer having the structure A-B-A', where block B is selected from polyethers or polyesters and blocks A and A' are identical or different, and at least one polymer (PM) selected from the group consisting of polyesters and polyethers, and a block (P2) selected from the group consisting of polyamides and polyesters, said process comprising the reaction of a composition comprising a triblock copolymer A-B-A' and a polymer (PM) selected from the group consisting of polyesters and polyethers.

15. A shaped article comprising a block copolymer according to any of claims 1 to 13 or a block copolymer obtained or obtainable by a process according to claim 14.

16. A foamed pellet material comprising a block copolymer according to any of claims 1 to 13 or a block copolymer obtained or obtainable by a process according to claim 14.

17. The foamed pellet material according to claim 16, wherein the average diameter of the particles is within a range from 0.5 to 20 mm.

18. A shaped article composed of a foamed pellet material according to either of claims 16 and 17.

19. The use of a block copolymer according to any of claims 1 to 13 for production of a shaped article.

20. The use according to claim 19, wherein the shaped article is at least partly in the form of a foam or particle foam.

21. The use according to claim 19 or 20, wherein the shaped article is part of a shoe sole, a mattress, seat cushion, underlay, grip, protective film, a component in automobile interiors and exteriors, a gymnastics mat, a body protector, a trim element in automobile construction, a sound insulator, a vibration damper, cushioning, a bicycle saddle, a toy, a tire or part of a tire, or a covering for a track and field surface, a sports hall or a pathway, a damping layer or a damping core in a sandwich element, or a packaging.

22. The use according to claim 19 or 20, wherein the shaped article is an injection-molded, extruded and pressed article, a hose, a cable or part of a cable, an elevator belt or drive belt, a conveyor belt, a hose, part of a shoe, a film, a nonwoven, fibers, a ski shoe or part of a ski shoe, a ski film, a plug, a damping element, housing, a molding for the electricals industry, automotive industry, mechanical engineering, 3D printing, medicine, consumer goods, and sports articles.

## Revendications

1. Copolymère séquencé, contenant au moins
(i) un bloc (P1), qui est obtenu ou peut être obtenu par transformation de
(a) un copolymère à trois blocs présentant la structure A-B-A', le bloc B étant choisi parmi les polyéthers ou les polyesters et les blocs A et A' étant identiques ou différents, et
(b) au moins un polymère (PM) dans le groupe constitué par les polyesters et les polyéthers,
(ii) et un bloc (P2) qui est choisi dans le groupe constitué par les polyamides et les polyesters.

2. Copolymère séquencé selon la revendication 1, le bloc B et le polymère (PM) étant choisis dans le groupe constitué par les polyéthers.

3. Copolymère séquencé selon l'une quelconque des revendications 1 ou 2, le copolymère à trois blocs étant utilisé en une quantité dans la plage de 20 à 80% en poids, par rapport à la somme de la quantité du copolymère à trois blocs et du polymère (PM).

4. Copolymère séquencé selon l'une quelconque des revendications 1 à 3, le bloc B étant choisi parmi les polyéthers et le polymère (PM) étant choisi parmi les polyéthers.

5. Copolymère séquencé selon l'une quelconque des revendications 1 à 4, le bloc B étant choisi parmi les poly(oxydes de tétraméthylène) et les poly(oxydes de triméthylène).

6. Copolymère séquencé selon la revendication 5, le poids moléculaire moyen en nombre Mn du poly(oxyde de tétraméthylène) étant situé dans la plage de 500 à 3500 g/mole.

7. Copolymère séquencé selon l'une quelconque des revendications 1 à 3, le bloc B étant choisi parmi les polyesters et le polymère (PM) étant choisi parmi les polyesters.

8. Copolymère séquencé selon l'une quelconque des revendications 1 à 7, le bloc A ou le bloc A' ou le bloc A et le bloc A' étant choisis parmi les polycaprolactones.

9. Copolymère séquencé selon l'une quelconque des revendications 1 à 7, le copolymère à trois blocs étant un poly-ε-caprolactone-polyol qui est obtenu ou qui peut être obtenu par transformation d'ε-caprolactone et d'une molécule de départ qui est choisie dans le groupe constitué par les a-hydro-ω-hydroxypoly(oxytétraméthylène)-diols.

10. Copolymère séquencé selon l'une quelconque des revendications 1 à 9, le poids moléculaire moyen en nombre Mn du polymère (PM) étant situé dans la plage de 500 à 3500 g/mole.

11. Copolymère séquencé selon l'une quelconque des revendications 1 à 10, le poids moléculaire moyen en nombre Mn du polymère (PM) étant situé dans la plage de 80 à 120% du poids moléculaire moyen en nombre du copolymère à trois blocs ABA'.

12. Copolymère séquencé selon l'une quelconque des revendications 1 à 11, le bloc (P2) étant un bloc de polyamide obtenu ou pouvant être obtenu par transformation d'un polyamide choisi dans le groupe constitué par les polyamides aliphatiques, partiellement aromatiques et aromatiques.

13. Copolymère séquencé selon l'une quelconque des revendications 1 à 11, le bloc (P2) étant un bloc de polyester obtenu ou pouvant être obtenu par transformation d'un polyester choisi dans le groupe constitué par les poly(téréphtalates de butylène) et les poly(téréphtalates d'éthylène).

14. Procédé pour la préparation d'un copolymère séquencé contenant au moins un bloc (P1), qui est obtenu ou peut être obtenu par transformation d'un copolymère à trois blocs présentant la structure A-B-A', le bloc B étant choisi parmi les polyéthers ou les polyesters et les blocs A et A' étant identiques ou différents, et d'au moins un polymère (PM) choisi dans le groupe constitué par les polyesters et les polyéthers, et un bloc (P2) qui est choisi dans le groupe constitué par les polyamides et les polyesters, comprenant la transformation d'une composition contenant un copolymère à trois blocs A-B-A' et un polymère (PM) choisi dans le groupe constitué par les polyesters et les polyéthers.

15. Corps façonné, comprenant un copolymère séquencé selon l'une quelconque des revendications 1 à 13 ou un copolymère séquencé obtenu ou pouvant être obtenu selon un procédé selon la revendication 14.

16. Granulat moussé, comprenant un copolymère séquencé selon l'une quelconque des revendications 1 à 13 ou un copolymère séquencé obtenu ou pouvant être obtenu selon un procédé selon la revendication 14.

17. Granulat moussé selon la revendication 16, le diamètre moyen des particules étant situé dans la plage de 0,5 à 20 mm.

18. Corps façonné constitué par un granulat moussé selon l'une quelconque des revendications 16 ou 17.

19. Utilisation d'un copolymère séquencé selon l'une quelconque des revendications 1 à 13 pour la fabrication d'un corps façonné.

20. Utilisation selon la revendication 19, le corps façonné se trouvant au moins partiellement sous forme d'une mousse ou d'une mousse particulaire.

21. Utilisation selon la revendication 19 ou 20, le corps façonné étant une partie d'une semelle, un matelas, un coussin, un support, une poignée, une feuille de protection, une pièce intérieure ou extérieure d'une voiture, un tapis de gymnastique, un dispositif de protection corporelle, un élément de revêtement dans la construction des voitures, un amortisseur de bruit, un amortisseur de vibrations, un rembourrage, une selle de bicyclette, un jouet, un pneu ou une partie de pneu ou un revêtement pour une piste d'athlétisme, un hall de sport ou une allée, une couche d'amortissement ou un noyau d'amortissement dans un élément sandwich ou un emballage.

22. Utilisation selon la revendication 19 ou 20, le corps façonné étant un article moulé par injection, extrudé et comprimé, un tuyau, un câble ou une partie de câble, une courroie de levage ou d'entraînement, une bande transporteuse, un tuyau, un élément d'une chaussure, une feuille, un non-tissé, des fibres, une chaussure de ski ou une partie d'une chaussure de ski, un film pour ski, une prise, un élément d'amortissement, un boîtier, une pièce moulée pour l'industrie électrique, l'industrie automobile, la construction de machines, l'impression 3D, la médecine, un article de consommation et des articles de sport.
